# EUROPÄISCHE PATENTSCHRIFT

(11) **EP 3 911 969 B1**
(45) Veröffentlichungstag und Bekanntmachung des Hinweises auf die Patenterteilung: **09.09.2026**
(21) Anmeldenummer: 20701032.3
(22) Anmeldetag: 16.01.2020
(51) Int. Cl.: G01S 7/40, G01M 17/007, G01S 13/931, G01S 7/497

(54) **DUMMY-VORRICHTUNG MIT BEWEGLICHEN RADARREFLEKTIERENDEN ELEMENTEN ZUM TESTEN VON FAHRERASSISTENZSYSTEMEN**
DUMMY APPARATUS WITH MOVABLE RADAR-REFLECTING ELEMENTS FOR TESTING DRIVER ASSISTANCE SYSTEMS
DISPOSITIF FACTICE DOTÉ D'ÉLÉMENTS MOBILES RÉFLÉCHISSANT LE RAYONNEMENT RADAR ET PERMETTANT DE TESTER DES SYSTÈMES D'AIDE À LA CONDUITE

(30) Priorität: 16.01.2019 DE 102019101100
(43) Veröffentlichungstag der Anmeldung: 24.11.2021
(73) Patentinhaber: 4Activesystems GmbH, 8772 Traboch (AT)
(72) Erfinder: HAFELLNER, Reinhard, 8724 Spielberg (AT); FRITZ, Martin, 8723 Kobenz (AT)
(74) Vertreter: Dilg, Haeusler, Schindelmann Patentanwaltsgesellschaft mbH
(86) Internationale Anmeldenummer: PCT/EP2020/051023
(87) Internationale Veröffentlichungsnummer: WO 2020/148386

(56) Entgegenhaltungen:
- EP-A1- 1 734 352
- DE-A1- 102013 113 466
- DE-A1- 2 929 814

## Beschreibung

### Technisches Gebiet

Die Erfindung betrifft eine Dummy-Vorrichtung zum Testen von Fahrerassistenzsystemen sowie ein Verfahren zum Betreiben einer Dummy-Vorrichtung.

### Hintergrund der Erfindung

In verschiedenen Tests von modernen Fahrerassistenzsystemen werden Dummys eingesetzt wie etwa Fußgänger-Dummys, Motorrad-Dummys oder Auto-Dummys. Solche Dummys gleichen in zumindest einem Aspekt oder einer Eigenschaft den Objekten, welche die Dummys simulieren sollen. Beispielsweise können Dummys eine ähnliche geometrische Form oder eine ähnliche Größe haben wie die zu simulierenden Objekte.

Kollisionen oder kollisionsnahe Situationen können in vielen Tests von Fahrerassistenzsystemen nicht vermieden werden und sind häufig sogar erwünscht, um Extremsituationen zu untersuchen oder auch um Fahrerassistenzsysteme zu trainieren. Etwaige Kosten oder sogar Personenschäden, die bei Kollisionen verursacht werden, sollen dabei möglichst gering gehalten werden. Entsprechend müssen Dummys kostengünstig herzustellen sein und auch nach gravierender mechanischer Einwirkung einfach und kostengünstig zu reparieren sein. Gleichzeitig sollen Dummys die Objekte, welche sie simulieren, möglichst realitätsnah nachbilden.

DE 10 2013 113 466 A1 offenbart eine Vorrichtung zum Test von Sensoren oder eines Fahrerassistenzsystems mithilfe eines Chassis oder Untersatzes, der ferngesteuert fahrbar und lenkbar ist. Der Untersatz weist ein Element auf, welches für den Sensor oder das Fahrerassistenzsystem ein Abbild eines Modells eines Testobjekts darstellt, zum Beispiel eines Fahrzeugs. Das Element kann beispielsweise eine etwa quadratische Fläche mit kreuzförmig angeordneten Rippensein, die auf einem Träger angeordnet ist. Eine automatische Ausrichtung des Elements kann mittels einer Aktuatorik durchgeführt werden. Mithilfe von Dopplergeneratoren kann das Rückstrahlsignal moduliert werden, wodurch eine zusätzliche Geschwindigkeit oder Elemente, die einen Dopplereffekt erzeugen, dargestellt werden können, beispielsweise ein Kühlerlüfter.

EP 1 734 352 A1 offenbart eine Kleidung aus einem Tuch. Die Kleidung wird auf ein Dummy-Objekt gelegt, das eine menschenähnliche Form hat und aus einem Material mit geringer Reflexion besteht, um eine Dummy-Puppe zu bilden. Anschließend wird ein Kollisionsprognose-Test oder eine Inspektion mittels eines Millimeterwellen-Radars durchgeführt. Die Kleidung kann dabei durch ein Gebläse bewegt werden, um ein Messergebnis wie bei einem tatsächlichen Menschen zu erhalten. Anstelle des Gebläses kann die Kleidung auch durch ein Vibrieren der Puppe bewegt werden oder die Puppe kann elastisch an einem Seil oder Kabel aufgehängt sein.

DE 29 29 814 A1 offenbart eine Einrichtung zur Erzeugung von Dopplerechos, um bewegte oder fluktuierende Radarziele zu simulieren. Hierfür ist an einer Halterung, welche an einer Drehachse befestigt ist, mindestens ein Tripelreflektor angebracht. Die Halterung, an welcher die Tripelreflektoren angebracht sind, kann aus stangen- oder stabförmigen Halterungselementen oder auch aus einer Scheibe bestehen.

### Darstellung der Erfindung

Es ist eine Aufgabe der vorliegenden Erfindung, eine Dummy-Vorrichtung für Tests von Fahrerassistenzsystemen bereitzustellen, die auch nach mechanischer Einwirkung für einen wiederholten Einsatz in Tests für Fahrerassistenzsysteme geeignet ist.

Diese Aufgabe wird mit einer Dummy-Vorrichtung zum Durchführen von Tests für Fahrerassistenzsysteme sowie mit einem Verfahren zum Betreiben einer Dummy-Vorrichtung gemäß den unabhängigen Ansprüchen gelöst.

Gemäß einem ersten Aspekt der vorliegenden Erfindung wird eine Dummy-Vorrichtung zum Durchführen von Tests für Fahrerassistenzsysteme beschrieben. Die Dummy-Vorrichtung weist einen Grundkörper mit einem Simulationsbereich auf, wobei der Grundkörper ein zu simulierendes Objekt abbildet und der Simulationsbereich einen beweglichen Teil des zu simulierenden Objekts abbildet und wobei der Simulationsbereich statisch an dem Grundkörper angeordnet ist. Zudem weist die Dummy-Vorrichtung mindestens ein Simulationselement auf, das an dem Simulationsbereich angeordnet ist. Dabei ist das Simulationselement konfiguriert, Signale, insbesondere Signalwellen, derart zu reflektieren und/oder zu emittieren, dass eine Bewegung des beweglichen Teils des zu simulierenden Objekts simulierbar ist. Ferner weist die Dummy-Vorrichtung einen Aktuator auf, mit welchem das Simulationselement antreibbar ist, wobei sich das Simulationselement seiner geometrischen Form und Größe von dem Simulationsbereich unterscheidet. Ferner weist die Dummy-Vorrichtung eine Steuereinheit auf, mittels welcher die Bewegung und die Geschwindigkeit der Bewegung des Simulationselements steuerbar ist, um eine Reflexionscharakteristik des Simulationselements zu erhalten, wobei die Geschwindigkeit des Simulationselements in Abhängigkeit von der Geschwindigkeit des Grundkörpers relativ zur Umgebung steuerbar ist.

Gemäß einem weiteren Aspekt der vorliegenden Erfindung wird ein Verfahren zum Betreiben einer Dummy-Vorrichtung beschrieben. Das Verfahren weist ein Bereitstellen einer Dummy-Vorrichtung auf, wobei die Dummy-Vorrichtung einen Grundkörper mit einem Simulationsbereich aufweist und mindestens ein Simulationselement aufweist, das an dem Simulationsbereich angeordnet ist und relativ zum Simulationsbereich beweglich ist. Zudem weist das Verfahren ein Bewegen des Simulationselements relativ zu dem Simulationsbereich auf derart, dass eine Bewegung eines beweglichen Teils eines zu simulierenden Objekts simuliert wird, wobei der Simulationsbereich den beweglichen Teil des zu simulierenden Objekts abbildet, wobei der Simulationsbereich statisch an dem Grundkörper angeordnet ist. Dabei ist das Simulationselement konfiguriert, Signale, insbesondere Signalwellen, zu reflektieren und/oder zu emittieren. Das Simulationselement wird mit einem Aktuator angetrieben, wobei sich das Simulationselement in seiner geometrischen Form und Größe von dem Simulationsbereich unterscheidet. die Bewegung und die Geschwindigkeit der Bewegung des Simulationselements (103) ist mittels einer Steuereinheit steuerbar, um eine Reflexionscharakteristik des Simulationselements zu erhalten, wobei die Geschwindigkeit des Simulationselements in Abhängigkeit von der Geschwindigkeit des Grundkörpers relativ zur Umgebung steuerbar ist.

Ein "Fahrerassistenzsystem" ist ein System, das den Fahrer eines Fahrzeugs, zum Beispiel eines Kraftfahrzeugs, bei der Fahrzeugführung unterstützt. Fahrerassistenzsysteme können auch in autonomen Fahrzeugen zum Einsatz kommen, in denen die Fahrzeugführung vollständig oder fast vollständig durch ein autonomes System übernommen wird, beispielsweise ein durch künstliche Intelligenz unterstütztes System, insbesondere eine entsprechende Computer-Software. Fahrerassistenzsysteme sind beispielsweise Notbremsassistenten, Spurwechselassistenten, Parkassistenten, Abstandsregler, Verkehrszeichenassistenten oder Nachtsichtassistenten.

Fahrerassistenzsysteme können Sensoren, insbesondere Radarsensoren, aufweisen, mit denen sie Signale aus der Umgebung empfangen. Mithilfe einer Auswertung solcher empfangener Signale können sie Aspekte der Umgebung erkennen, insbesondere Eigenschaften von verschiedenen Objekten oder Objekttypen in der Umgebung. Derartige Eigenschaften können zum Beispiel Entfernungen, geometrische Ausmaße oder Geschwindigkeiten von Objekten sein. Geschwindigkeiten können relativ zur Umgebung bestimmt sein, beispielsweise relativ zu einer Straße, oder auch relativ zu einem Fahrzeug mit dem Fahrerassistenzsystem. Objekte können eine Gesamtgeschwindigkeit oder Schwerpunktgeschwindigkeit haben, Teile des Objekts können aber auch in beliebiger Weise relativ zueinander und relativ zur Schwerpunktbewegung bewegbar sein. Fahrerassistenzsysteme können auch Sender von Signalen aufweisen, die von der Umgebung in charakteristischer Weise verändert werden, um dann von den Sensoren zumindest teilweise empfangen zu werden, beispielsweise Sender von Radarwellen.

Bei einem Test eines Fahrerassistenzsystems kann ein Fahrzeug mit dem Fahrerassistenzsystem ausgestattet sein. Das derart ausgestattete Fahrzeug kann auf einer Teststrecke mit vorbestimmten Situationen konfrontiert werden, wobei die Reaktion des Fahrerassistenzsystems auf eine vorbestimmte Situation beobachtet und nach vorgegebenen Kriterien beurteilt wird. Fahrerassistenzsysteme können auch getestet werden, ohne dass sie in ein Fahrzeug eingebaut sind.

Ein "zu simulierendes Objekt" kann jedes Objekt sein, das beim Einsatz eines Fahrerassistenzsystems beispielsweise im Straßenverkehr von dem Fahrerassistenzsystem erkennbar sein soll. Insbesondere kann so ein zu simulierendes Objekt für die Sensoren des Fahrerassistenzsystems wahrnehmbar oder erkennbar sein. Ein zu simulierendes Objekt kann sich in der Umgebung des Fahrzeugs befinden, in dem das Fahrerassistenzsystem eingebaut ist. Zum Beispiel kann das zu simulierende Objekt ein weiteres Fahrzeug sein, insbesondere ein Kraftwagen, ein Kraftrad, eine Zugmaschine, ein Schienenfahrzeug, ein Flugzeug oder ein Fahrrad, oder eine Person sein, insbesondere ein Fußgänger oder ein spielendes Kind, oder ein Tier sein, insbesondere ein Wildschwein, ein Reh oder ein Elch. Das zu simulierende Objekt kann in Bezug auf die Umgebung beweglich, kann aber auch in Bezug auf die Umgebung unbewegt oder unbeweglich sein.

Ein "beweglicher Teil" des zu simulierenden Objekts kann jeder Teil des Objekts sein, der in Bezug auf andere Teile des zu simulierenden Objekts zumindest teilweise beweglich ist. Insbesondere kann so ein beweglicher Teil um einen oder mehrere Drehpunkte drehbar beweglich sein, beispielsweise mittels eines Gelenks oder mittels einer Achse. Der bewegliche Teil kann auch translatorisch entlang einer durch das zu simulierende Objekt vorgegebenen Richtung beweglich sein. Die translatorische Bewegung kann beispielsweise durch eine Schiene an dem zu simulierenden Objekt bestimmt sein. Grundsätzlich kann der bewegliche Teil beliebig bewegbar sein, insbesondere auch durch eine Kombination von Rotationsbewegungen und translatorischen Bewegungen. Der bewegliche Teil kann einen Teil des zu simulierende Objekts darstellen, der besonders stark eine Signalwelle, insbesondere eine Radarwelle, reflektiert, insbesondere stärker, gleich oder schwächer reflektiert als andere, insbesondere nicht bewegliche, Bereiche des zu simulierenden Objekts. Der bewegliche Teil kann ein Teil sein, der ein für das zu simulierende Objekt oder für einen zu simulierenden Objekttyp charakteristisches Bewegungsprofil aufweist, beispielsweise ein Rad eines Fahrzeugs oder eine Extremität eines Menschen. Dieses charakteristische Bewegungsprofil kann ein charakteristisches Signalecho erzeugen, mit welchem das zu simulierende Objekt oder ein zu simulierender Objekttyp identifiziert oder erkannt werden kann.

Ein "Grundkörper" der Dummy-Vorrichtung kann ein zu simulierendes Objekt abbilden oder simulieren. "Abbilden" oder "Simulieren" kann hier bedeuten, dass Grundkörper und zu simulierendes Objekt in bestimmten Eigenschaften ähnlich sind oder im Wesentlichen übereinstimmen, beispielsweise in der Form oder den geometrischen Ausmaßen. Insbesondere können Grundkörper und zu simulierendes Objekt in solchen Eigenschaften übereinstimmen, die für Sensoren von Fahrerassistenzsystemen wahrnehmbar oder erkennbar sind. Zum Beispiel kann ein Signalecho, insbesondere eine bei Reflexion eines Signals verursachte charakteristische Frequenzverschiebung, ähnlich sein.

Der "Simulationsbereich" des Grundkörpers ist ein Bereich des Grundkörpers, der den beweglichen Teil des zu simulierenden Objekts zumindest teilweise abbildet oder simuliert. Insbesondere kann der Simulationsbereich in Bezug auf den Grundkörper an einer ähnlichen geometrischen Position angeordnet sein wie der bewegliche Teil des zu simulierenden Objekts in Bezug auf das zu simulierende Objekt. Er kann auch ähnliche geometrische Ausmaße in Bezug auf den Grundkörper aufweisen wie der bewegliche Teil des zu simulierenden Objekts in Bezug auf das zu simulierende Objekt. Der Simulationsbereich kann beispielsweise ein Rad oder eine menschliche Extremität abbilden.

Der Simulationsbereich ist konfiguriert, den beweglichen Teil des zu simulierenden Objekts optisch zu simulieren, beispielsweise für ein optisches Aufnahmegerät, etwa eine Fotokamera oder eine Videokamera. Dafür kann der Simulationsbereich eine Oberfläche aufweisen, die mit einer Ansicht des beweglichen Teils bedruckt ist. Beispielsweise kann er einen bedruckten Schaumstoff, eine bedruckte Pappe und/oder ein bedrucktes Papier aufweisen. Der Simulationsbereich ist statisch an dem Grundkörper angeordnet sein. Er kann in Form und/oder Größe dem gesamten beweglichen Teil entsprechen. Er kann in Form und/oder Größe auch lediglich einem signalreflektierenden, insbesondere radarreflektierenden Bereich des beweglichen Teils entsprechen, beispielsweise der Felge eines Rads.

Das "Simulationselement" kann an dem Simulationsbereich beweglich angeordnet sein. Das Simulationselement kann wie der Simulationsbereich den beweglichen Teil des zu simulierenden Objekts abbilden oder simulieren. Insbesondere kann das Simulationselement einen Bewegungszustand oder eine Bewegungsabfolge des beweglichen Teils des zu simulierenden Objekts abbilden. Insbesondere kann der Bewegungszustand des Simulationselements relativ zu dem Simulationsbereich und/oder Grundkörper den Bewegungszustand des beweglichen Teils des zu simulierenden Objekts relativ zu dem zu simulierenden Objekt abbilden. Dafür können sich bestimmte Bereiche, insbesondere signalreflektierende Bereiche, des Simulationselements, mit derselben Geschwindigkeit bewegen wie andere Bereiche, insbesondere signalreflektierende Bereiche, des beweglichen Teils des zu simulierenden Objekts. Die Geschwindigkeiten können dabei geringfügig abweichen, beispielsweise um bis zu 5 Prozent, um bis zu 10 Prozent oder um bis zu 20 Prozent.

Das Simulationselement ist mittels eines Aktuators, z.B. eines Elektromotors, insbesondere eines Linearmotors bei translatorischen Bewegungen des Simulationselements, antreibbar. Der Antrieb kann elektromagnetisch, elektrisch, mechanisch, hydraulisch, pneumatisch oder händisch erfolgen. Unter anderem können Spulen oder Hubmagneten für den Antrieb verwendet werden. Eine Steuereinheit steuert die Bewegung und die Geschwindigkeit der Bewegung des Simulationselements, um entsprechend die gewünschte Reflexionscharakteristik des Simulationselements zu erhalten.

Simulationselemente sind konfiguriert, Signalwellen zu reflektieren und/oder zu emittieren. Zum Beispiel können sie Signalwellen derart reflektieren, dass das reflektierte Signal, insbesondere die Differenz zwischen einfallendem und reflektiertem Signal, charakteristisch ist für das zu simulierende Objekt, insbesondere für den beweglichen Teil des zu simulierenden Objekts. Die Simulationselemente können auch Signalwellen derart emittieren, dass das emittierte Signal charakteristisch ist für das zu simulierende Objekt, insbesondere für den beweglichen Teil des zu simulierenden Objekts. Entsprechend kann das Simulationselement beispielsweise eine Sendeeinrichtung, beispielweise eine Antenne, zum Senden von Signalwellen, beispielsweise Radarwellen, aufweisen. Insbesondere wenn das Simulationselement einen Emitter aufweist, kann das Simulationselement auch statisch an dem Simulationsbereich angeordnet sein.

Signalwellen können jegliche Art von Signalen sein, die wellenförmig ausgeprägt sind, insbesondere eine sich räumlich ausbreitende periodische Schwingung aufweisen, oder zumindest aus wellenförmigen Signalen zusammensetzbar sein. Signalwellen können transversale oder longitudinale Wellen sein. Sie können mechanische an ein Medium gebundene Wellen sein oder Wellen, die sich auch im Vakuum ausbreiten. Signalwellen können beispielsweise elektromagnetische oder akustische Wellen sein, insbesondere Radiowellen, Mikrowellen, Licht, Röntgenstrahlung oder Radarwellen. Signalwellen können beispielsweise auch Laserstrahlen oder Lidarwellen sein, insbesondere Laserpulse. Im Prinzip ist jegliche Signalform durch Überlagerung oder Superposition von Wellen darstellbar, zum Beispiel Rechtecksignale. Der Begriff "Signal" schließt auch solche Informationsträger ein, die nicht notwendigerweise wellenförmig ausgebildet sind.

Mit der erfindungsgemäßen Dummy-Vorrichtung kann die Funktion eines Fahrerassistenzsystems realitätsnah getestet werden. Insbesondere kann die erfindungsgemäße Dummy-Vorrichtung reale Objekte beispielsweise im Straßenverkehr realitätsnah abbilden, insbesondere derart abbilden, dass sie von Fahrerassistenzsystemen als reale Objekte eines bestimmten Typs erkannt werden. Zum Beispiel können von dem Simulationselement reflektierte und/oder emittierte Signalwellen Informationen über den Bewegungszustand des Simulationselements aufweisen. Dieser Bewegungszustand oder eine entsprechende Bewegungsabfolge kann charakteristisch für ein zu simulierendes reales Objekt sein, insbesondere für einen beweglichen Teil des realen Objekts. Entsprechend können die von dem Simulationselement reflektierten und/oder emittierten Signalwellen charakteristisch sein für von einem zu simulierenden Objekt reflektierte und/oder emittierte Signalwellen, insbesondere für von einem beweglichen Teil des Objekts reflektierte und/oder emittierte Signalwellen. Aufgrund der beschriebenen Ähnlichkeit der Bewegungsprofile und der daraus folgenden Ähnlichkeit der reflektierten und/oder emittierten Signalwellen lässt sich mit der Dummy-Vorrichtung ein reales Objekt für ein Fahrerassistenzsystem geeignet simulieren.

Das Simulationselement unterscheidet sich in seiner geometrischen Form und Größe von dem beweglichen Teil des zu simulierenden Objekts und von dem Simulationsbereich des Grundkörpers, wobei aufgrund der Bewegung des Simulationselements die Reflexionen der Signalwellen charakteristisch für das zu simulierende Objekt, insbesondere für den beweglichen Teil des zu simulierenden Objekts, sind. Somit kann beispielsweise das Simulationselement eine robustere und ggf. kleinere Ausgestaltung aufweisen als der zu simulierende Teil des Objekts. Es muss sich somit nicht der gesamte Simulationsbereich des Grundkörpers, wie beispielsweise eine Radabbildung der Dummy-Vorrichtung, bewegen, sondern lediglich das Simulationselement, um ein charakteristisches Signalecho für ein charakteristisches Bewegungsprofil des zu simulierenden Teils des Objekts wiederzugeben.

Wesentlich für den beschriebenen Zusammenhang zwischen Bewegungszustand und reflektierten und/oder emittierten Signalwellen ist der sogenannte Dopplereffekt. Nach dem Dopplereffekt verändert sich die Frequenz oder Wellenlänge einer Welle bei relativer Bewegung zwischen Sender und Empfänger der Welle, insbesondere wenn sich Sender und Empfänger aufeinander zu oder voneinander weg bewegen. Der Dopplereffekt kann auch von der Geschwindigkeit eines Trägermediums der Welle abhängen.

Bei Reflexion an einem Objekt tritt der Dopplereffekt zweifach auf, erstens aufgrund der relativen Bewegung zwischen Sender und reflektierendem Objekt und zweitens aufgrund der relativen Bewegung zwischen reflektierendem Objekt und Empfänger. Bei Emission hingegen tritt der Dopplereffekt nur aufgrund der relativen Bewegung zwischen Quelle und Empfänger auf.

Der sogenannte Mikro-Dopplereffekt beruht auf denselben physikalischen Prinzipien wie der Dopplereffekt. Durch den Mikro-Dopplereffekt werden relative Bewegungen zwischen verschiedenen Teilen eines Objekts aufgelöst. Insbesondere können relative Bewegungen von verschiedenen kleineren Teilen eines Objekts mit Bezug auf einen großen Teil des Objekts aufgelöst werden. Die Amplitude oder Intensität der von den kleineren Teilen reflektierten und/oder emittierten Wellen kann dann kleiner sein als die Amplitude oder Intensität der von dem großen Teil reflektierten und/oder emittierten Welle. Beispielsweise können Mikro-Dopplereffekte durch die Bewegung der Räder eines LKWs, insbesondere der Felgen, oder durch die Bewegung von Triebwerken bei einem Flugzeug hervorgerufen werden.

Insbesondere der Mikro-Dopplereffekt erlaubt es, verschiedene Objekte oder Objekttypen anhand charakteristischer interner Bewegungen zwischen unterschiedlichen Bestandteilen eines Objekts zu identifizieren, wobei insbesondere die Frequenzverteilung eines reflektierten und/oder emittierten Signals indikativ ist für diese charakteristischen Bewegungen. Eine geeignete Dummy-Vorrichtung zum Testen von Fahrerassistenzsystemen lässt sich demnach realisieren, indem die Dummy-Vorrichtung die Frequenzverteilung eines bestimmten Objekts oder Objekttyps nachbildet oder simuliert.

Gleichzeitig lässt sich so eine Dummy-Vorrichtung mit viel geringerem Aufwand herstellen und reparieren als vergleichbare reale Objekte wie Motorräder oder Autos. Beispielsweise kann so eine Dummy-Vorrichtung aus kostengünstigen Materialien hergestellt sein, etwa aus Schaumstoff oder aus Kunststoffmaterialien. Sie kann nur grob die Umrisse des zu simulierenden Objekts nachbilden, ohne die volle Komplexität der verschiedenen Bauteile des realen Objekts aufzuweisen.

Gemäß einer weiteren beispielhaften Ausführungsform ist das Simulationselement relativ zu dem Simulationsbereich beweglich. Das kann vorteilhaft sein, um einen beweglichen Teil eines zu simulierenden Objekts zu simulieren.

Gemäß einer weiteren beispielhaften Ausführungsform weist das Simulationselement ein retroreflektierendes Element, insbesondere einen Tripelspiegel oder ein Tripelprisma, auf. Ein retroreflektierendes Element kann ein Element sein, bei welchem einfallende Signalwellen im Wesentlichen unabhängig von der Einfallsrichtung sowie der Ausrichtung des retroreflektierenden Elements im Wesentlichen entlang der Einfallsrichtung zurückreflektiert werden. Eine solche Rückreflexion kann auf einen bestimmten Winkelbereich der Einfallswinkel beschränkt sein.

Ein Tripelspiegel ist ein Beispiel für ein retroreflektierendes Element. Bei einem Tripelspiegel werden drei reflektierende oder spiegelnde Oberflächen so angeordnet, dass die Oberflächen jeweils zueinander einen Winkel von 90° aufweisen. Andere Winkel sind auch möglich. Ein Tripelspiegel ist beispielsweise ein konkaver Bereich, dessen Oberfläche aus drei Dreiecken gebildet wird, die an einer Ecke, an welcher sich alle drei Dreiecke berühren, jeweils einen Winkel von 90° ausbilden. Um Radarwellen zu reflektieren, können die spiegelnden Oberflächen beispielsweise aus Metall, insbesondere aus Blech, ausgebildet sein. Ein Tripelprisma ist ein weiteres Beispiel für ein retroreflektierendes Element. Ein solches Tripelprisma wirkt analog zu einem Tripelspiegel, weist aber ein zusätzliches Medium in dem konkaven Bereich auf, das für die Signalwellen zumindest teilweise transparent ist. Weiterhin sind beispielsweise linsenförmige Ausführungen von retroreflektierenden Elementen möglich.

Das Anbringen von retroreflektierenden Elementen an dem Simulationselement hat den Vorteil, dass einfallende Signalwellen in Richtung der Signalquelle zurückgestrahlt werden. Damit können eine Signalquelle und ein Sensor zum Auswerten der reflektierten Strahlung in unmittelbarer Nähe zueinander in dem Fahrerassistenzsystem angeordnet werden. Zudem kann das Verhältnis zwischen der Intensität der vom Sensor wahrgenommenen Signalwellen im Vergleich mit der Intensität der von der Quelle ausgestrahlten Signalwellen vergrößert werden. Zum Beispiel kann ein Tripelspiegel mit Ausmaßen in der Größenordnung von ungefähr 10 cm ein ähnliches Radarecho verursachen wie ein realer LKW ohne retroreflektierende Elemente.

Gemäß einer weiteren beispielhaften Ausführungsform weist das Simulationselement eine Oberfläche auf, welche einen konkaven Bereich aufweist. Ein solcher konkaver, d.h. nach innen gewölbter, Bereich kann geeignet sein, eine Signalwelle mit möglichst großer Intensität in Einfallsrichtung zu reflektieren. Ein solcher konkaver Bereich kann zum Beispiel einen Tripelspiegel ausbilden.

Gemäß einer weiteren beispielhaften Ausführungsform weist das Simulationselement eine weitere Oberfläche auf, welche einen konvexen Bereich aufweist. Dabei können die Oberfläche und die weitere Oberfläche einander gegenüberliegen. Ein konvexer, d.h. nach außen gewölbter, Bereich kann geeignet sein, eine Signalwelle mit möglichst geringer Intensität in Einfallsrichtung zu reflektieren, weil die einfallenden Signalwellen durch die Oberflächen des konvexen Bereichs entsprechend abgelenkt werden. Konvexe und konkave Oberflächenbereiche des Simulationselements können genutzt werden, um besonders stark reflektierende und besonders schwach reflektierende Oberflächenbereiche auszubilden. Zum Beispiel können plättchenartige Teile des Simulationselements so ausgestaltet sein, dass auf einer ersten Hauptfläche des Plättchens ein konkaver Bereich ausgebildet wird, der aufgrund der geringen Dicke des Plättchens einen entsprechenden konvexen Bereich auf einer zweiten Hauptfläche des Plättchens ausbildet, wobei die zweite Hauptfläche der ersten Hauptfläche gegenüberliegt.

Gemäß einer weiteren beispielhaften Ausführungsform weist das Simulationselement eine Oberfläche und eine weitere Oberfläche, die der Oberfläche gegenüberliegt, auf, wobei die Oberfläche und die weitere Oberfläche im Wesentlichen plan ausgebildet sind. Keine konkaven oder konvexen Bereiche auf Oberflächen auszubilden hat den Vorteil, dass solche Oberflächen ein gleiches oder ähnliches Reflexionsverhalten haben. Zum Beispiel können plättchenartige Teile des Simulationselements so ausgestaltet sein, dass zwei gegenüberliegende Hauptflächen plan sind und ein gleiches oder ähnliches Reflexionsverhalten haben.

Gemäß einer weiteren beispielhaften Ausführungsform weist das Simulationselement ein radarreflektierendes Element auf und die Signale sind Radarwellen. Das radarreflektierende Element kann beispielsweise ein radarretroreflektierendes Element sein, insbesondere ein radarreflektierender Tripelspiegel. Zum Beispiel können die Spiegelflächen ein Metall, z.B. Blech, aufweisen. Das Verwenden von radarreflektierenden Elementen ist deswegen zweckdienlich, weil Radarsensoren in vielen Fahrerassistenzsystemen Verwendung finden. Das liegt unter anderem daran, dass Radarsender und Radarempfänger kostengünstig realisierbar sind.

Gemäß einer weiteren beispielhaften Ausführungsform kann das Simulationselement ein retroreflektierendes Element aufweisen und der Teil des Simulationselements, der von dem retroreflektierenden Element verschieden ist, kann konfiguriert sein, die Signalwellen schwächer zu reflektieren und/oder zu emittieren als das retroreflektierende Element. Eine solche Konfiguration trägt dazu bei, dass das reflektierte Signal besonders deutlich und störungsfrei ist.

Gemäß einer weiteren beispielhaften Ausführungsform ist das Simulationselement an einem Drehpunkt an dem Grundkörper befestigt und drehbar gelagert. Das Simulationselement ist konfiguriert, zumindest eines von einer Rotationsbewegung und einer Pendelbewegung um den Drehpunkt auszuführen. Eine solche Konfiguration ist vorteilhaft, um Objekte zu simulieren, bei denen bewegliche Teile ebenfalls beispielsweise an einer Achse oder einem Gelenk drehbar gelagert sind. Zum Beispiel kann ein solcher beweglicher Teil ein Rad eines Autos, eines Motorrads oder eines Fahrrads sein, oder er kann eine Extremität eines Menschen oder eines Tiers sein.

Gemäß einer weiteren beispielhaften Ausführungsform weist das Simulationselement ein stabförmiges Element auf, dessen Haupterstreckungsrichtung im Wesentlichen in radialer Richtung von dem Drehpunkt verläuft, und weist mindestens ein reflektierendes und/oder emittierendes Element auf, das an dem stabförmigen Element angebracht ist. Das reflektierende und/oder emittierende Element kann ein retroflektierendes Element aufweisen und/oder eine Oberfläche mit einem konkaven Bereich aufweisen. Das reflektierende und/oder emittierende Element kann aber auch lediglich plane Oberflächen aufweisen, die jeweils ähnliche Reflexionseigenschaften haben. Das reflektierende und/oder emittierende Element kann eine Rotationsbewegung um den Drehpunkt ausführen oder eine Schwingungs- oder Pendelbewegung ausführen, bei welcher sich die Bewegungsrichtung um den Drehpunkt periodisch ändert. Bei einer solchen Pendelbewegung kann sich beispielsweise die Geschwindigkeit des reflektierenden und/oder emittierenden Elements näherungsweise sinusförmig ändern. Auf diese Weise lässt sich beispielsweise ein Rad simulieren oder ein Arm, insbesondere ein Oberarm, der zum Beispiel beim Laufen oder Rennen vor und zurück pendelt.

Gemäß einer weiteren beispielhaften Ausführungsform ist der Abstand in radialer Richtung zwischen dem Drehpunkt und dem reflektierenden und/oder emittierenden Element kleiner als eine entsprechende räumliche Ausdehnung des Simulationsbereichs, insbesondere kleiner als die halbe Ausdehnung, insbesondere kleiner als ein Drittel der Ausdehnung. Die entsprechende räumliche Ausdehnung kann ein Durchmesser des Simulationsbereichs sein. Das Simulationselement kann somit viel kleiner sein als der Simulationsbereich, wobei der Simulationsbereich ähnliche Ausmaße wie der bewegliche Teil des zu simulierenden Objekts haben kann. Entsprechend kann mit verhältnismäßig geringem Materialaufwand ein zu simulierendes Objekt nachgebildet werden.

Gemäß einer weiteren beispielhaften Ausführungsform ist das stabförmige Element derart konfiguriert, dass es mit einer Winkelgeschwindigkeit drehbar ist, so dass das reflektierende und/oder emittierende Element im Wesentlichen, d.h. z.B. mit einer Abweichung von bis zu 3 oder bis zu 5 Prozent, mit derselben Geschwindigkeit bewegbar ist wie der bewegliche Teil des zu simulierenden Objekts, insbesondere wie ein reflektierender und/oder emittierender beweglicher Teil des zu simulierenden Objekts. Dies kann insbesondere gelten, wenn die Geschwindigkeit des Grundkörpers der Geschwindigkeit des zu simulierenden Objekts entspricht. Eine solche Konfiguration kann vorteilhaft sein, weil reflektierende und/oder emittierende Teile bei gleicher Geschwindigkeit die gleiche Dopplerverschiebung erzeugen. Daher ist das Signalecho des reflektierenden und/oder emittierenden Elements der Dummy-Vorrichtung ähnlich oder gleich dem Signalecho eines reflektierenden und/oder emittierenden Teils des zu simulierenden Objekts, insbesondere in Bezug auf Frequenzverschiebungen, die durch Dopplereffekte hervorgerufen werden. Das Signalecho des reflektierenden und/oder emittierenden Elements der Dummy-Vorrichtung kann ferner eine ähnliche Intensität haben wie das Signalecho des reflektierenden und/oder emittierenden Teils des zu simulierenden Objekts, beispielsweise mit maximaler Abweichung um einen Faktor zehn.

Gemäß einer weiteren beispielhaften Ausführungsform erstreckt sich das stabförmige Element von beiden Seiten des Drehpunkts aus, wobei das Simulationselement ein zweites reflektierendes und/oder emittierendes Element aufweist, wobei das zweite reflektierende und/oder emittierende Element an dem stabförmigen Element angebracht ist. Dabei sind das reflektierende und/oder emittierende Element und das zweite reflektierende und/oder emittierende Element auf gegenüberliegenden Seiten des Drehpunkts angebracht. Das zweite reflektierende und/oder emittierende Element kann wiederum ein retroreflektierendes Element sein. Das zweite reflektierende und/oder emittierende Element kann in demselben Abstand von dem Drehpunkt angeordnet sein wie das reflektierende und/oder emittierende Element, so dass sich die beiden Elemente betragsmäßig mit derselben Geschwindigkeit bewegen. Auf diese Weise kann das von dem Simulationselement reflektierte und/oder emittierte Signal verstärkt werden, bei geeigneter Konfiguration im Wesentlichen verdoppelt werden. Durch weitere stabförmige Elemente mit entsprechenden reflektierenden und/oder emittierenden Elementen kann das reflektierte und/oder emittierte Signal weiter verstärkt werden.

Gemäß einer weiteren beispielhaften Ausführungsform weist das Simulationselement eine Scheibe auf, die an dem Drehpunkt drehbar gelagert ist, und weist mindestens ein reflektierendes und/oder emittierendes Element auf, welches an dem Umfang der Scheibe angebracht ist. Das reflektierende und/oder emittierende Element kann zum Beispiel ein retroreflektierendes Element sein, insbesondere ein Tripelspiegel oder ein Tripelprisma, kann ein konkaver Bereich einer spiegelnden Oberfläche oder eine plane spiegelnde Oberfläche sein. Die Scheibe kann entweder massiv ausgeführt sein oder sie kann ein oder mehrere Löcher aufweisen. Sie kann in der Form eines Rads mit oder ohne Speichen ausgebildet sein. Auf diese Weise lässt sich beispielsweise geeignet ein Rad, insbesondere eine Drehbewegung des Rads sowie ein Signalecho des Rads, simulieren. Die Scheibe kann eine Kunststoffscheibe sein, insbesondere eine dünne Kunststoffscheibe.

Gemäß einer weiteren beispielhaften Ausführungsform ist das reflektierende und/oder emittierende Element ein metallisches Element, insbesondere ein metallisches Tape. Mehrere metallische Elemente können an dem Umfang der Scheibe angebracht sein, beispielsweise aufgeklebt sein. Zum Beispiel können 20 bis 30 metallische Tapes in gleichen Abständen auf dem Umfang der Scheibe verteilt sein. Metallische Elemente können auch an stabförmigen Elementen angebracht sein oder an beliebigen anderen Formen von Simulationselementen. Eine derartige Anordnung ist besonders einfach und kostengünstig zu realisieren.

Gemäß einer weiteren beispielhaften Ausführungsform weist das Simulationselement mindestens ein weiteres reflektierendes und/oder emittierendes Element auf, wobei das reflektierende und/oder emittierende Element und das weitere reflektierende und/oder emittierende Element jeweils eine Oberfläche und jeweils eine weitere Oberfläche, die der Oberfläche gegenüberliegt, aufweisen, wobei die Oberfläche konfiguriert ist, die Signale, insbesondere die Signalwellen, stärker zu reflektieren und/oder zu emittieren als die weitere Oberfläche, wobei die Oberfläche des reflektierenden und/oder emittierenden Elements und die Oberfläche des weiteren reflektierenden und/oder emittierenden Elements entlang des Umfangs der Scheibe in entgegengesetzte Richtungen weisen.

Eine solche Anordnung kann vorteilhaft sein, weil Signalwellen in beide möglichen Laufrichtungen eines Rads gleichermaßen reflektiert werden. Insbesondere kann das Signalecho für entgegengesetzte Blickrichtungen auf das Rad bei gleicher Relativgeschwindigkeit zum Sender und Empfänger gleich sein. Auch werden Signalwellen nicht nur entweder von einer Oberseite des Rads oder von einer Unterseite, d.h. einer auf der Straße aufliegenden Seite, des Rads reflektiert. Dies kann auch insofern vorteilhaft sein, weil die Geschwindigkeit des Rads an dem auf der Straße aufliegenden Punkt näherungsweise Null ist.

Gemäß einer weiteren beispielhaften Ausführungsform weist das Simulationselement ein reflektierendes und/oder emittierendes Element sowie ein weiteres reflektierendes und/oder emittierendes Element auf, wobei das reflektierende und/oder emittierende Element und das weitere reflektierende und/oder emittierende Element jeweils eine Oberfläche und jeweils eine weitere Oberfläche, die der Oberfläche gegenüberliegt, aufweisen, wobei die Oberfläche konfiguriert ist, die Signale, insbesondere die Signalwellen, stärker zu reflektieren und/oder zu emittieren als die weitere Oberfläche, wobei die Oberfläche des reflektierenden und/oder emittierenden Elements und die Oberfläche des weiteren reflektierenden und/oder emittierenden Elements in Bezug auf eine Rotation des Simulationselements in entgegengesetzte Richtungen weisen. Die Vorteile sind analog zu der zuvor beschriebenen Ausführungsform.

Gemäß einer weiteren beispielhaften Ausführungsform sind das reflektierende und/oder emittierende Element und das weitere reflektierende und/oder emittierende Element alternierend entlang des Umfangs angebracht sind. Daraus folgt unter anderem, dass es eine ähnliche Anzahl von beiden Typen von Elementen gibt. Entsprechend ergibt sich aus entgegengesetzten Blickrichtungen auf das Rad bei gleichem Bewegungszustand des Rads in Bezug auf Sender und Empfänger ein ähnliches Signalecho. Dies kann vorteilhaft bei der Identifizierung verschiedener Objekttypen sein. Der Effekt kann noch weiter verstärkt werden, indem die Elemente in gleichen Abständen zueinander auf dem Umfang angeordnet werden und/oder indem an gegenüberliegenden Punkten des Umfangs Elemente jeweils des gleichen Typs oder jeweils unterschiedlichen Typs angeordnet werden.

Gemäß einer weiteren beispielhaften Ausführungsform ist der Durchmesser dₛ der Scheibe kleiner als der Durchmesser dᵣ des Simulationsbereichs, insbesondere kleiner als 1/2 dᵣ. Der Durchmesser dₛ kann auch kleiner als 2/3 dᵣ, insbesondere kleiner als 1/3 dᵣ, insbesondere kleiner als 1/4 dᵣ, insbesondere kleiner als 1/10 dᵣ sein. Das Simulationselement kann somit viel kleiner sein als der Simulationsbereich, wobei der Simulationsbereich ähnliche Ausmaße wie der bewegliche Teil des zu simulierenden Objekts haben kann. Entsprechend kann mit verhältnismäßig geringem Materialaufwand ein zu simulierendes Objekt nachgebildet werden. Wird mit der Scheibe ein Rad des zu simulierenden Objekts nachgebildet, kann ein kleiner Durchmesser der Scheibe den Vorteil haben, dass die Scheibe einen geringeren Verschleiß und geringere Abnutzungserscheinungen zeigt als ein zu simulierendes Rad, weil beispielsweise die Scheibe den Boden nicht berührt, über den sich die Dummy-Vorrichtung bewegt.

Gemäß einer weiteren beispielhaften Ausführungsform sind die geometrischen Ausmaße eines Simulationselements kleiner, insbesondere kleiner als halb so groß, als die Ausmaße des Simulationsbereichs. Die Vorteile sind analog zu der zuvor beschriebenen beispielhaften Ausführungsform.

Gemäß einer weiteren beispielhaften Ausführungsform ist der Durchmesser des Simulationselements kleiner als ein Durchmesser des beweglichen Teils des zu simulierenden Objekts und/oder kleiner als ein Durchmesser des Simulationsbereichs, insbesondere kleiner als 5/6, insbesondere kleiner als 4/5, insbesondere kleiner als 2/3, insbesondere kleiner als 1/2 des Durchmessers des beweglichen Teils des zu simulierenden Objekts und/oder des Durchmessers des Simulationsbereichs. Der Durchmesser des beweglichen Teils des zu simulierenden Objekts kann ein Durchmesser des gesamten beweglichen Teils oder lediglich eines signalreflektierenden Bereichs des beweglichen Teils sein. Die Vorteile sind wieder analog zu den zuvor beschriebenen Ausführungsformen.

Gemäß einer weiteren beispielhaften Ausführungsform ist die Scheibe derart konfiguriert, dass sie mit einer Winkelgeschwindigkeit drehbar ist, so dass das reflektierende und/oder emittierende Element im Wesentlichen, d.h. z.B. mit einer Abweichung von bis zu 3 oder bis zu 5 Prozent, mit derselben Geschwindigkeit bewegbar ist wie der bewegliche Teil des zu simulierenden Objekts, insbesondere wie ein reflektierender und/oder emittierender beweglicher Teil des zu simulierenden Objekts. Dies kann insbesondere gelten, wenn die Geschwindigkeit des Grundkörpers der Geschwindigkeit des zu simulierenden Objekts entspricht. Dies kann vorteilhaft sein, weil reflektierende und/oder emittierende Teile bei gleicher Geschwindigkeit die gleiche Dopplerverschiebung erzeugen. Daher ist das Signalecho des reflektierenden und/oder emittierenden Elements der Dummy-Vorrichtung ähnlich oder gleich dem Signalecho eines reflektierenden und/oder emittierenden Teils des zu simulierenden Objekts, insbesondere in Bezug auf Frequenzverschiebungen, die durch Dopplereffekte hervorgerufen werden. Entsprechend kann die Dummy-Vorrichtung das Dopplerecho eines zu simulierenden Objekttyps geeignet simulieren. Das Signalecho des reflektierenden und/oder emittierenden Elements der Dummy-Vorrichtung kann ferner eine ähnliche Intensität haben wie das Signalecho des reflektierenden und/oder emittierenden Teils des zu simulierenden Objekts, beispielsweise mit maximaler Abweichung um einen Faktor zehn.

Gemäß einer weiteren beispielhaften Ausführungsform weist das Simulationselement ein stabförmiges Element auf und weist mindestens ein reflektierendes und/oder emittierendes Element auf, das an einem Ende des stabförmigen Elements angebracht ist. Eine solche Anordnung ist einerseits sehr einfach, kann aber andererseits eine Vielzahl unterschiedlicher beweglicher Teile von verschiedenen zu simulierenden Objekten abbilden, beispielsweise Räder oder auch langgestreckte Elemente, die an Gelenken befestigt sind, beispielsweise Arme oder Beine.

Gemäß einer weiteren beispielhaften Ausführungsform ist das stabförmige Element konfiguriert, eine im Wesentlichen lineare Bewegung auszuführen, insbesondere im Wesentlichen entlang der Haupterstreckungsachse des stabförmigen Elements. Eine solche lineare Bewegung kann beispielsweise vorteilhaft sein, um mit einfachen Mitteln ein Rad zu simulieren. Dabei kann das stabförmige Element in der Mitte des Simulationsbereichs angeordnet sein, wobei der Simulationsbereich in Bezug auf den Grundkörper ungefähr den Ausmaßen und der Position eines Rads des zu simulierenden Objekts entsprechen kann. Eine Anordnung in der Mitte des Simulationsbereichs kann der Symmetrie des zu simulierenden Rads Rechnung tragen.

Gemäß einer weiteren beispielhaften Ausführungsform ist ein reflektierendes und/oder emittierendes Element des Simulationselements konfiguriert, eine lineare Bewegung in Bezug auf den Simulationsbereich und/oder den Grundkörper auszuführen. Das reflektierende und/oder emittierende Element kann dabei mit einer Geschwindigkeit bewegbar sein, die einer Geschwindigkeitskomponente des beweglichen Teils des zu simulierenden Objekts entspricht. Dafür kann die Geschwindigkeit über die Zeit änderbar sein, beispielsweise sinusförmig änderbar.

Gemäß einer weiteren beispielhaften Ausführungsform ist eine Oberfläche des reflektierenden und/oder emittierenden Elements, die ein retroreflektierendes Element aufweist, im Wesentlichen senkrecht zu der Haupterstreckungsachse und/oder der Bewegungsrichtung des stabförmigen Elements ausgerichtet. In anderen Worten ist der Normalenvektor der retroreflektierenden Oberfläche im Wesentlichen parallel zu der Haupterstreckungsachse und/oder der Bewegungsrichtung des stabförmigen Elements ausgerichtet. Dies kann vorteilhaft sein, weil die Dopplerverschiebung besonders groß und besonders deutlich ausgeprägt sein kann, wenn die retroreflektierende Oberfläche in Bewegungsrichtung zeigt.

Gemäß einer weiteren beispielhaften Ausführungsform ist das stabförmige Element derart an dem Simulationsbereich angeordnet, dass das stabförmige Element mit einer Geschwindigkeit bewegbar, insbesondere translatorisch bewegbar, ist, die im Wesentlichen einer Geschwindigkeitskomponente des beweglichen Teils des zu simulierenden Objekts entspricht. Dies kann insbesondere gelten, wenn die Geschwindigkeit des Grundkörpers der Geschwindigkeit des zu simulierenden Objekts entspricht. Eine Geschwindigkeitskomponente in einer bestimmten Richtung ergibt sich dabei durch (senkrechte) Projektion eines Geschwindigkeitsvektors auf diese bestimmte Richtung.

Die beschriebene Konfiguration kann vorteilhaft sein, weil reflektierende und/oder emittierende Teile bei gleicher Geschwindigkeit die gleiche Dopplerverschiebung erzeugen. Daher ist das Signalecho des reflektierenden und/oder emittierenden Elements der Dummy-Vorrichtung ähnlich oder gleich dem Signalecho eines reflektierenden und/oder emittierenden Teils des zu simulierenden Objekts, zumindest in Bezug auf Frequenzverschiebungen, die durch Dopplerverschiebungen hervorgerufen werden. Entsprechend kann die Dummy-Vorrichtung das Dopplerecho eines zu simulierenden Objekts oder Objekttyps geeignet simulieren.

Beispielsweise kann die lineare Bewegung des stabförmigen Elements und des reflektierenden und/oder emittierenden Elements die alternierende Vorwärts- und Rückwärtsbewegung eines Punktes auf oder an einem Rad und/oder einer Felge simulieren projiziert auf eine Richtung, die analog ist zu der Haupterstreckungsrichtung des stabförmigen Elements. Die Haupterstreckungsrichtung des stabförmigen Elements kann im Wesentlichen parallel zu einer Oberfläche, beispielsweise einer Straße, sein, auf der sich die Dummy-Vorrichtung bewegt. Die Haupterstreckungsrichtung kann entlang des Grundkörpers oder parallel zum Grundkörper ausgerichtet sein, insbesondere entlang des Simulationsbereichs oder parallel zum Simulationsbereich.

Gemäß einer weiteren beispielhaften Ausführungsform ist die Geschwindigkeit des stabförmigen Elements über die Zeit sinusförmig änderbar. Dies kann vorteilhaft sein, um Pendelbewegungen nachzubilden, die häufig durch eine sinusförmige Geschwindigkeitsverteilung zumindest näherungsweise charakterisiert werden können. Zudem kann durch eine sinusförmige Geschwindigkeitsverteilung die Bewegung eines Rads nachgebildet werden, weil die zuvor beschriebene Vorwärts- und Rückwärtsbewegung eines Punktes auf oder an einem Rad eine sinusförmige Geschwindigkeitsverteilung aufweist. So lässt sich auf besonders einfache und effiziente Weise das Signalecho eines Rads simulieren.

Gemäß einer weiteren beispielhaften Ausführungsform kann der Grundkörper konfiguriert sein, zumindest eines zu simulieren von einem Auto, einem Motorrad, einem Fahrrad, einem Menschen, insbesondere einem Fußgänger, und einem Tier, insbesondere einem Wildschwein, einem Elch oder einem Reh.

Gemäß einer weiteren beispielhaften Ausführungsform kann der Simulationsbereich konfiguriert sein, zumindest eines zu simulieren von einem Oberschenkel, einem Knie, einem Unterschenkel, einem Fuß, einem Oberarm, einem Ellbogen, einem Unterarm, einer Hand, einer Pfote, einem Rad und einer Felge. Insbesondere kann der Simulationsbereich konfiguriert sein, einen stark reflektierenden und/oder emittierenden beweglichen Teil eines zu simulierenden Objekts nachzubilden, wobei der stark reflektierende und/oder emittierende Teil stärker reflektiert und/oder emittiert als andere Bereiche des zu simulierenden Objekts. Zum Beispiel kann der Simulationsbereich eine Felge eines Rads sein, die Radarwellen besonders gut reflektiert.

Gemäß einer weiteren beispielhaften Ausführungsform weist ein Test-System eine erfindungsgemäße Dummy-Vorrichtung auf. Zudem weist das Test-System einen Sender auf, der konfiguriert ist, die Signale, insbesondere die Signalwellen, zu senden, wobei das Simulationselement der Dummy-Vorrichtung konfiguriert ist, das gesendete Signal zu reflektieren. Ferner weist das Test- System einen Empfänger auf, der konfiguriert ist, das reflektierte Signal zu empfangen sowie eine Signalverarbeitungseinheit, die konfiguriert ist, das empfangene Signal zu analysieren. Insbesondere können Sender und Empfänger nahe beieinander angeordnet sein. Sie können auf der gleichen Vorrichtung, insbesondere einem Testfahrzeug, angeordnet sein. Sender und Empfänger können sich also mit derselben Geschwindigkeit bewegen. Weiterhin können Sender und Empfänger im Wesentlichen in dieselbe Richtung ausgerichtet sein, damit der Empfänger von dem Sender ausgestrahlte und an einem Objekt reflektierte Wellen, insbesondere retroreflektierte Wellen, empfangen kann.

Das Test-System weist ferner zum Beispiel eine Steuereinheit auf, welche entsprechende Steuersignale an das Simulationselement bzw. den Aktuator des Simulationselements senden kann. Die Steuereinheit steuert somit die Bewegung und die Geschwindigkeit der Bewegung des Simulationselements, um entsprechend die gewünschte Reflexionscharakteristik des Simulationselements zu erhalten. Die Geschwindigkeit des Simulationselements ist in Abhängigkeit von der Geschwindigkeit des Grundkörpers relativ zur Umgebung, beispielsweise zu einer Straße, steuerbar.

Die Signalverarbeitungseinheit kann die empfangenen Wellen analysieren im Hinblick auf Winkel beziehungsweise Richtung, aus welcher die reflektierten Wellen empfangen werden, und/oder im Hinblick auf die Entfernung von Objekten, die sich aus der Zeitverschiebung zwischen Senden und Empfangen von Signalen sowie aus der Signalgeschwindigkeit ergibt. Ferner kann die Bewegung eines Objekts aus mehreren aufeinanderfolgenden Entfernungsmessungen bestimmt werden. Schließlich kann die Frequenzverschiebung eines reflektierten Signals Aufschluss über die Relativbewegung zwischen Sender und Empfänger geben.

Gemäß einer weiteren beispielhaften Ausführungsform weist eine Frequenzverteilung des reflektierten Signals Informationen auf über eine Bewegung des Grundkörpers und/oder eine Bewegung des Simulationselements. Diese Informationen können sich insbesondere aus einer Frequenzverschiebung der Signalwellen bei Reflexion an einem bewegten Objekt ergeben, wobei die Frequenzverschiebung durch den Dopplereffekt verursacht wird. Die Frequenzverteilung kann zeitabhängig sein.

Gemäß einer weiteren beispielhaften Ausführungsform sind der Grundkörper und das bewegliche Simulationselement derart ausgebildet und bewegbar, dass die Frequenzverteilung des reflektierten Signals indikativ ist für eine weitere Frequenzverteilung eines weiteren reflektierten Signals, das von dem zu simulierenden Objekt reflektierbar ist, wobei die Frequenzverteilung mittels zumindest eines der folgenden Parameter definierbar ist: einer Breite der Frequenzverteilung, einer Periodendauer einer zeitlichen Veränderung der Frequenzverteilung, einer Intensität der Frequenzverteilung und einer Amplitude und/oder einer Frequenz von zumindest einem Maximum der Frequenzverteilung. Dies kann insbesondere gelten, wenn die Geschwindigkeit des Grundkörpers der Geschwindigkeit des zu simulierenden Objekts entspricht.

Mit anderen Worten kann die Frequenzverteilung des von der Dummy-Vorrichtung reflektierten Signals einer weiteren Frequenzverteilung entsprechen, die an dem zu simulierenden Objekt reflektiert wird. Insbesondere kann die Frequenzverteilung des von dem Simulationselement reflektierten Signals einer Frequenzverteilung entsprechen, die an dem beweglichen Teil des Objekts reflektiert wird. Insbesondere kann die Frequenzverteilung des von einem reflektierenden und/oder emittierenden Element des Simulationselements reflektierten Signals einer Frequenzverteilung entsprechen, die von einem reflektierenden und/oder emittierenden beweglichen Teil des Objekts reflektiert wird. Ein Entsprechen kann hier ein Übereinstimmen in zumindest einer der zuvor genannten Eigenschaften von Frequenzverteilungen bedeuten. Dieses Übereinstimmen kann durch analog auftretende Dopplereffekte, insbesondere analog auftretende Mikro-Dopplereffekte, verursacht werden. Übereinstimmen kann hier näherungsweise verstanden werden, dass beispielsweise die Maxima in Amplitude und/oder Lage um nicht mehr als 5 Prozent, insbesondere um nicht mehr als 10 Prozent, insbesondere um nicht mehr als 50 Prozent voneinander abweichen.

Gemäß einer weiteren beispielhaften Ausführungsform ist die Signalverarbeitungseinheit konfiguriert, ein Objekt und/oder einen Objekttyp anhand bestimmter Eigenschaften der am Empfänger empfangenen Frequenzverteilung zu identifizieren. Diese Eigenschaften können insbesondere die im Zusammenhang mit der vorstehenden beispielhaften Ausführungsform genannten Eigenschaften sein.

Gemäß einem weiteren Aspekt der vorliegenden Erfindung wird ein Simulationselement für eine Dummy-Vorrichtung zum Durchführen von Tests für Fahrerassistenzsysteme beschrieben. Das Simulationselement ist konfiguriert, Signale derart zu reflektieren und/oder zu emittieren, dass eine Bewegung eines beweglichen Teils eines zu simulierenden Objekts simulierbar ist. Ferner ist das Simulationselement an einem Simulationsbereich eines Grundkörpers der Dummy-Vorrichtung befestigbar, wobei der Grundkörper das zu simulierendes Objekt abbildet und der Simulationsbereich den beweglichen Teil des zu simulierenden Objekts abbildet.

Gemäß einer weiteren beispielhaften Ausführungsform umfasst das Simulationselement eine Energieversorgungseinheit und/oder eine Steuereinheit, um die Bewegung des Simulationselements zu steuern. Damit wird eine autarke, eigenständige Einheit geschaffen, die modular einsetzbar ist.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine perspektivische Darstellung eines Ausschnitts einer Dummy-Vorrichtung gemäß einer beispielhaften Ausführungsform der vorliegenden Erfindung,
Fig. 2 eine perspektivische Darstellung eines Simulationselements einer Dummy-Vorrichtung gemäß einer beispielhaften Ausführungsform der vorliegenden Erfindung,
Fig. 3 eine perspektivische Darstellung eines Simulationsbereichs und eines Simulationselements gemäß einer beispielhaften Ausführungsform der vorliegenden Erfindung,
Fig. 4 eine Seitenansicht des Simulationselements aus Fig. 3,
Fig. 5 eine Seitenansicht eines Simulationselements gemäß einer beispielhaften Ausführungsform der vorliegenden Erfindung,
Fig. 6 eine perspektivische Darstellung eines Ausschnitts einer Dummy-Vorrichtung gemäß einer beispielhaften Ausführungsform der vorliegenden Erfindung,
Fig. 7 eine schematische Darstellung eines Test-Systems gemäß einer beispielhaften Ausführungsform der vorliegenden Erfindung,
Fig. 8 eine perspektivische Darstellung einer Dummy-Vorrichtung gemäß einer beispielhaften Ausführungsform der vorliegenden Erfindung,
Fig. 9 eine perspektivische Darstellung einer Dummy-Vorrichtung gemäß einer beispielhaften Ausführungsform der vorliegenden Erfindung und
Fig. 10 eine Dummy-Vorrichtung sowie eine Detailansicht eines zugehörigen Simulationselements gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

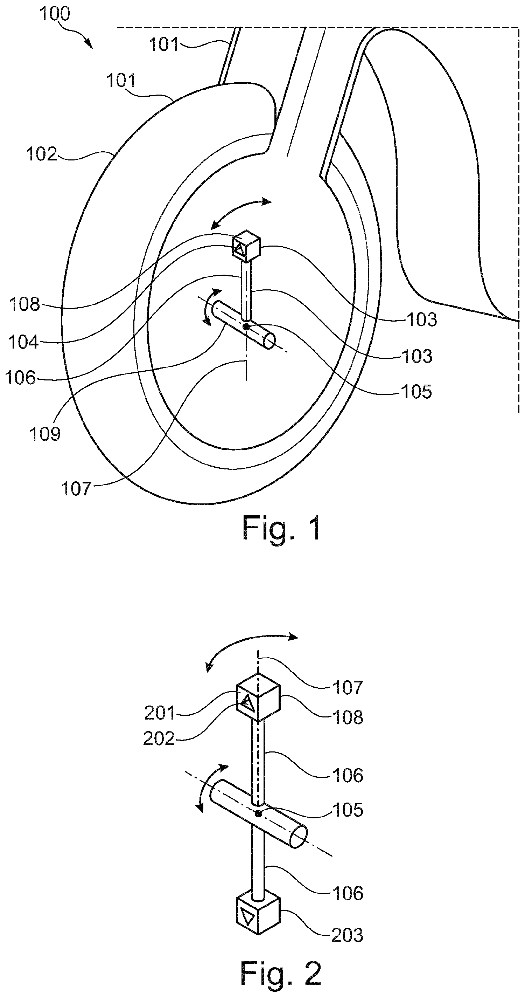

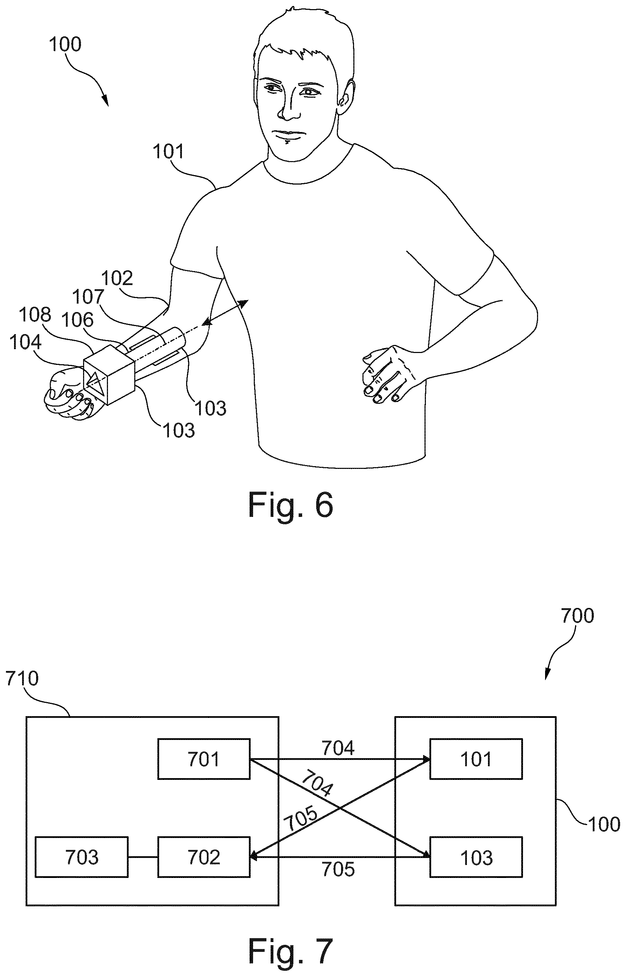

**Figur 1** zeigt eine Dummy-Vorrichtung 100 zum Durchführen von Tests für Fahrerassistenzsysteme gemäß einer beispielhaften Ausführungsform der vorliegenden Erfindung. Die Dummy-Vorrichtung 100 weist einen Grundkörper 101 mit einem Simulationsbereich 102 auf, wobei der Grundkörper ein zu simulierendes Objekt abbildet und der Simulationsbereich 102 einen beweglichen Teil des zu simulierenden Objekts abbildet. Zudem weist die Dummy-Vorrichtung 100 mindestens ein Simulationselement 103 auf, das an dem Simulationsbereich 102 angeordnet ist und relativ zu dem Simulationsbereich 102 beweglich ist. Das Simulationselement 103 ist konfiguriert, Signalwellen 704, 705 (siehe Figur 7) derart zu reflektieren und/oder zu emittieren, dass eine Bewegung des beweglichen Teils des zu simulierenden Objekts simulierbar ist.

In dem Ausführungsbeispiel in Figur 1 ist die Dummy-Vorrichtung 101 ein Kraftrad-Dummy, welcher nur zum Teil abgebildet ist. Entsprechend ist der Grundkörper 101 ein Kraftrad-Grundkörper. Der Kraftrad-Grundkörper simuliert ein Kraftrad. Deswegen kann der Grundkörper 101 in seinen geometrischen Ausmaßen näherungsweise einem tatsächlichen Kraftrad entsprechen. Der Grundkörper 101 kann aus anderen Materialien hergestellt sein als ein tatsächliches Kraftrad und einen weniger komplexen Aufbau als ein tatsächliches Kraftrad besitzen.

Der Grundkörper 101 weist einen Simulationsbereich 102 auf, welcher ein bewegliches Element des Kraftrads simuliert oder nachbildet. In Figur 1 ist der Simulationsbereich 102 ein Bereich des Grundkörpers 101, der das Vorderrad des Kraftrads abbildet und hier in seinen Ausmaßen und/oder seiner Position in Bezug auf den Grundkörper 101 einem Vorderrad analog ist. Der Simulationsbereich 102 kann aber auch lediglich der Felge eines Vorderrads analog sein.

Das Simulationselement 103 gemäß der beispielhaften Ausführungsform in Figur 1 ist an dem Simulationsbereich 102 angeordnet und relativ zu dem Simulationsbereich 102 beweglich, insbesondere auch relativ zu dem Grundkörper 101 beweglich, der den Simulationsbereich 102 aufweist. Das Simulationselement 103 gemäß der Ausführungsform in Figur 1 weist ein stabförmiges Element 106 auf, das an einem Drehpunkt 105 an dem Simulationsbereich 102 befestigt und drehbar gelagert ist. Die Haupterstreckungsrichtung 107 des stabförmigen Elements verläuft im Wesentlichen in radialer Richtung von dem Drehpunkt 105, wobei das stabförmige Element sich nur auf einer Seite des Drehpunkts erstreckt. Das Simulationselement 102 kann ferner ein weiteres stabförmiges Element 109 aufweisen, das mit dem stabförmigen Element 106 verbunden ist, sich senkrecht zu dem stabförmigen Element 106 erstreckt und dessen Haupterstreckungsrichtung entlang der Drehachse des Simulationselements verläuft beziehungsweise die Drehachse des Simulationselements bildet.

Ein reflektierendes und/oder emittierendes Element 108 ist an demjenigen Ende des stabförmigen Elements 106 angebracht, welches nicht mit dem weiteren stabförmigen Element 109 verbunden ist. Das reflektierende und/oder emittierende Element 108 kann ein retroreflektierendes Element 104 aufweisen. Eine Oberfläche, die das retroreflektierende Element 104 aufweist, kann derart angeordnet sein, dass der Normalenvektor der Oberfläche in eine mögliche Drehrichtung zeigt. Ein Winkelbereich, in welchem das retroreflektierende Element 104 mit großer oder maximaler Intensität reflektiert, kann um die mögliche Drehrichtung symmetrisch angeordnet sein. Ferner kann das reflektierende und/oder emittierende Element 108 ein weiteres retroreflektierendes Element aufweisen, welches an einer weiteren Oberfläche angeordnet ist, die der Oberfläche mit dem retroreflektierenden Element 104 gegenüberliegt.

**Figur 2** zeigt eine vergrößerte Darstellung des Simulationselements aus Figur 1, wobei sich das stabförmige Element 106 auf beiden Seiten des Drehpunkts 105 erstreckt. Dieses kann aber muss nicht eine Kontinuität des stabförmigen Elements 106 im Bereich des Drehpunkts 105 bedeuten. Das stabförmige Element 106 kann auch aus zwei räumlich getrennten Bereichen bestehen, die sich auf gegenüberliegenden Seiten des Drehpunkts in dieselbe Richtung erstrecken.

Das reflektierende und/oder emittierende Element 108 kann eine Oberfläche 201 aufweisen, die einen konkaven Bereich 202 aufweist. Ein solcher konkaver Bereich 202 kann beispielsweise ein retroreflektierendes Element ausbilden, insbesondere einen Tripelspiegel. Die Oberfläche 201 kann in eine mögliche Bewegungsrichtung des reflektierenden und/oder emittierenden Elements ausgerichtet sein.

Ein weiteres reflektierendes und/oder emittierendes Element 203 kann an dem stabförmigen Element 106 derart angebracht sein, dass das reflektierende und/oder emittierende Element 108 und das weitere reflektierende und/oder emittierende Element 203 auf gegenüberliegenden Seiten des Drehpunkts angebracht sind. Das weitere reflektierende und/oder emittierende Element 203 kann ebenfalls mindestens eine Oberfläche mit einem konkaven Bereich und/oder ein retroreflektierendes Element aufweisen. Die Oberfläche mit dem konkaven Bereich und/oder das retroreflektierende Element können wie bei dem reflektierenden und/oder emittierenden Element 108 in eine mögliche Bewegungsrichtung oder Drehrichtung des weiteren reflektierenden und/oder emittierenden Elements 203 ausgerichtet sein.

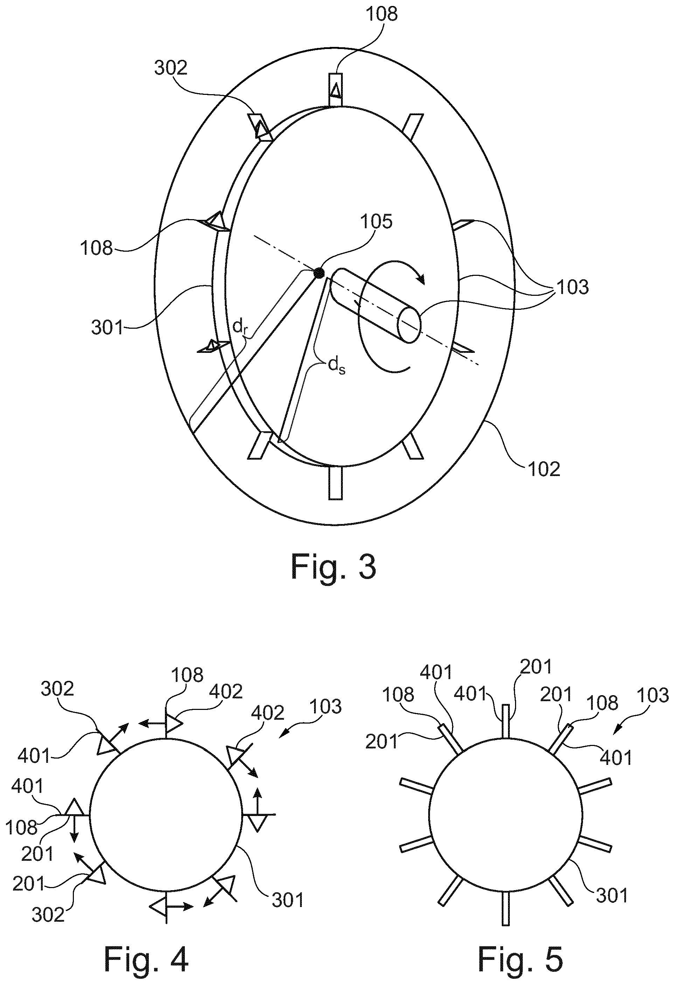

**Figur 3** zeigt einen Simulationsbereich 102 und ein Simulationselement 103 gemäß einer beispielhaften Ausführungsform. Der Simulationsbereich 102 kann scheibenförmig ausgebildet sein und kann beispielsweise das Rad oder die Felge eines Kraftrads oder eines Kraftfahrzeugs abbilden. Das Simulationselement 103 kann eine Scheibe 301 aufweisen, die an einem Drehpunkt 105 an dem Simulationsbereich 102 befestigt und drehbar gelagert ist. Insbesondere kann der Drehpunkt 105 zumindest annähernd in einer Mitte des Simulationsbereichs 102 angeordnet sein und mit einer Mitte der Scheibe 301 verbunden sein, so dass Scheibe 301 und Simulationsbereich 102 annähernd konzentrisch angeordnet sind. Die Scheibe kann einen Radius dₛ aufweisen. Der Simulationsbereich 102 kann einen Radius dᵣ aufweisen, wobei der Radius dₛ kleiner sein kann als der Radius dᵣ, insbesondere kleiner als 2/3 dᵣ, insbesondere kleiner als 1/2 dᵣ, insbesondere kleiner als 1/3 dᵣ, insbesondere kleiner als 1/4 dᵣ, insbesondere kleiner als 1/10 dᵣ. Der Radius dₛ kann auch gleich groß oder größer als dᵣ sein. Der Begriff "Radius" kann hier auch in einem verallgemeinerten Sinn verstanden werden als eine mittlere Ausdehnung eines Körpers in verschiedene Richtungen.

An oder auf dem Umfang der Scheibe 301 können reflektierende und/oder emittierende Elemente 108 angeordnet sein. Diese können scheiben- oder plättchenförmig ausgebildet sein. Hauptoberflächen der reflektierenden und/oder emittierenden Elemente 108 können in Bewegungsrichtung ausgerichtet sein, das heißt der Normalenvektor der Hauptoberfläche kann im Wesentlichen parallel zur Bewegungsrichtung des reflektierenden und/oder emittierenden Elements 108 ausgerichtet sein, mit anderen Worten parallel zu einer Richtung, die tangential zum Umfang der Scheibe 301 verläuft. Weitere reflektierende und/oder emittierende Elemente 302 können so angeordnet sein, dass sie in Bezug auf eine Bewegungsrichtung oder Drehrichtung anders ausgerichtet sind als die reflektierenden und/oder emittierenden Elemente 108.

**Figur 4** zeigt eine Seitenansicht des Simulationselements 103 aus Figur 3 gemäß einer beispielhaften Ausführungsform. Eine Vielzahl von reflektierenden und/oder emittierenden Elementen 108 und eine Vielzahl von weiteren reflektierenden und/oder emittierenden Elementen 302 sind an oder auf dem Umfang der Scheibe 301 angeordnet. Die reflektierenden und/oder emittierenden Elemente 108 und die weiteren reflektierende und/oder emittierenden Elemente 302 weisen jeweils eine Oberfläche 201 mit einem konkaven Bereich auf und eine weitere Oberfläche 401 mit einem konvexen Bereich 402, wobei für jedes Element die Oberfläche 201 der weiteren Oberfläche 401 gegenüberliegt. Die Oberfläche 201 kann in Umfangsrichtung der Scheibe ausgerichtet sein, das heißt der Normalenvektor der Oberfläche kann im Wesentlichen parallel zu einer Richtung sein, die tangential zum Umfang der Scheibe 301 verläuft. Ebenso kann die weitere Oberfläche 401 in Umfangsrichtung der Scheibe 301 ausgerichtet sein. Der konkave Bereich kann als Tripelspiegel ausgebildet sein. Der konvexe Bereich 402 kann durch die Rückseite des Tripelspiegels ausgebildet sein. Die Oberfläche mit dem konkaven Bereich kann ein retroreflektierendes Element darstellen.

Die Oberflächen 201 der reflektierenden und/oder emittierenden Elemente 108 können in eine entgegengesetzte Richtung entlang des Umfangs der Scheibe 301 ausgerichtet sein im Vergleich mit den Oberflächen 401 der weiteren reflektierenden und/oder emittierenden Elements 302. Die reflektierenden und/oder emittierenden Elemente 108 und die weiteren reflektierenden und/oder emittierenden Elemente 302 können alternierend entlang des Umfangs angeordnet sein. Sie können einen im Wesentlichen gleichen Abstand zueinander haben, insbesondere kann der Abstand zwischen benachbarten Elementen im Wesentlichen gleich sein. An gegenüberliegenden Positionen auf oder an dem Umfang der Scheibe 301 können jeweils Elemente des gleichen Typs angeordnet sein, also entweder jeweils reflektierende und/oder emittierende Elemente 108 oder jeweils weitere reflektierende und/oder emittierende Elemente 302. An gegenüberliegenden Positionen auf oder an dem Umfang der Scheibe 301 können auch jeweils Elemente unterschiedlichen Typs angeordnet sein, also jeweils ein reflektierendes und/oder emittierendes Element 108 gegenüber von einem weiteren reflektierenden und/oder emittierenden Element 302.

**Figur 5** zeigt eine Seitenansicht eines Simulationselements 103 gemäß einer beispielhaften Ausführungsform. Das Simulationselement 103 weist eine Scheibe 301 und eine Vielzahl von reflektierenden und/oder emittierenden Elementen 108 auf. Die reflektierenden und/oder emittierenden Elemente 108 sind scheibenförmig oder plättchenförmig ausgebildet. Hauptoberflächen 501, 502 der reflektierenden und/oder emittierenden Elemente 108 sind in Umfangsrichtung der Scheibe 301 ausgerichtet, d.h. ihr Normalenvektor ist parallel zum Umfang der Scheibe ausgerichtet. Zwei Hauptoberflächen 501, 502 eines reflektierenden und/oder emittierenden Elements liegen jeweils einander gegenüber und sind in entgegengesetzte Richtungen ausgerichtet. Im Unterschied zu der Ausführungsform gemäß Figur 4 sind die Hauptoberflächen 501 und 502 ähnlich ausgestaltet. Insbesondere weisen sie ein ähnliches Reflexionsverhalten auf.

**Figur 6** zeigt eine Dummy-Vorrichtung 100 gemäß einer beispielhaften Ausführungsform. Die Dummy-Vorrichtung 100 ist hier ein Personen-Dummy, welcher nur zum Teil abgebildet ist. Entsprechend ist der Grundkörper 101 ein Personen-Grundkörper. Der Personen-Grundkörper simuliert eine Person. Deswegen kann er in seinen geometrischen Ausmaßen näherungsweise einer tatsächlichen Person, beispielsweise einem Fußgänger, entsprechen, kann aber aus anderen Materialien hergestellt sein als ein tatsächlicher Fußgänger und einen weit weniger komplexen Aufbau als ein tatsächlicher Fußgänger besitzen.

Der Personen-Grundkörper weist einen Simulationsbereich 102 auf, welcher ein bewegliches Element der Person simuliert oder nachbildet. In Figur 6 ist der Simulationsbereich 102 ein Bereich des Grundkörpers 101, der einen Oberarm der Person abbildet und hier in seinen Ausmaßen und/oder seiner Position in Bezug auf den Grundkörper 101 einem Oberarm analog ist. Der Simulationsbereich muss in seinen Ausmaßen und seiner Position nicht mit dem abgebildeten beweglichen Teil eines zu simulierenden Objekts übereinstimmen.

Das Simulationselement 103 gemäß der beispielhaften Ausführungsform in Figur 6 ist an dem Simulationsbereich 102 angeordnet und relativ zu dem Simulationsbereich 102 beweglich, insbesondere auch relativ zu dem Grundkörper 101 beweglich, der den Simulationsbereich 102 aufweist. Das Simulationselement 103 gemäß der Ausführungsform in Figur 6 weist ein stabförmiges Element 106 auf, das konfiguriert ist, eine im Wesentlichen lineare Bewegung im Wesentlichen entlang der Haupterstreckungsachse 107 des stabförmigen Elements 106 auszuführen, insbesondere eine lineare Bewegung, bei der sich das stabförmige Element 106 abwechselnd vor und zurück bewegt, insbesondere periodisch vor und zurück bewegt. Die lineare Bewegung des stabförmigen Elements kann beispielsweise durch Bewegung entlang einer Schiene entstehen.

Ein reflektierendes und/oder emittierendes Element 108 ist an einem Ende des stabförmigen Elements 106 angebracht. Das reflektierende und/oder emittierende Element 108 kann eine Oberfläche mit einem retroreflektierenden Element 104 und/oder mit einem konkaven Bereich aufweisen, wobei die Oberfläche im Wesentlichen entlang der Haupterstreckungsachse 107 des stabförmigen Elements 106 ausgerichtet ist. Mit anderen Worten ist ein Normalenvektor der Oberfläche im Wesentlichen parallel zu der Haupterstreckungsachse 107. Die Bewegung des Simulationselements, insbesondere des reflektierenden und/oder emittierenden Elements, kann beispielsweise die Pendelbewegung eines Oberarms, insbesondere die Pendelbewegung eines Ellbogens, simulieren.

Gemäß einer beispielhaften Ausführungsform kann das Simulationselement 103 aus Figur 6 auch ein Rad und/oder eine Felge simulieren. Das Simulationselement 103 kann im Zentrum eines Simulationsbereichs angeordnet sein, der das Rad und/oder die Felge abbildet. Die lineare Bewegung des stabförmigen Elements 106 und des reflektierenden und/oder emittierenden Elements 108 kann die alternierende Vorwärts- und Rückwärtsbewegung eines Punktes auf oder an dem Rad und/oder der Felge simulieren projiziert auf eine Richtung, die analog ist zu der Haupterstreckungsrichtung des stabförmigen Elements. Zu diesem Zweck kann die lineare Bewegung des stabförmigen Elements relativ zum Simulationsbereich 102 insbesondere eine sinusförmige Geschwindigkeitsverteilung aufweisen. Ferner kann die Haupterstreckungsrichtung des stabförmigen Elements im Wesentlichen parallel zu einer Oberfläche, beispielsweise einer Straße, sein, auf der sich die Dummy-Vorrichtung bewegt. Die Haupterstreckungsrichtung kann entlang des Grundkörpers oder parallel zum Grundkörper ausgerichtet sein, insbesondere entlang des Simulationsbereichs oder parallel zum Simulationsbereich.

**Figur 7** zeigt ein Test-System 700 gemäß einer beispielhaften Ausführungsform. Das Test-System 700 weist eine erfindungsgemäße Dummy-Vorrichtung 100 auf, welche einen Grundkörper 101 und ein Simulationselement 103 aufweist. Zudem weist das Test-System 700 eine Testeinheit 710 auf. Die Testeinheit weist einen Sender 701 auf, der konfiguriert ist, die Signalwellen 704 an den Grundkörper 101 und/oder das Simulationselement 103 zu senden, wobei das Simulationselement 103 und/oder der Grundkörper 101 der Dummy-Vorrichtung 100 konfiguriert sind, das gesendete Signal 704 zu reflektieren. Die Testeinheit 710 weist zudem einen Empfänger 702 auf, der konfiguriert ist, das reflektierte Signal 705 zu empfangen, und die Testeinheit 710 weist eine Signalverarbeitungseinheit 703 auf, die konfiguriert ist, das empfangene Signal zu analysieren. Eine Frequenzverteilung des reflektierten Signals 705, insbesondere eine Differenz zwischen der Frequenzverteilung des gesendeten Signals 704 und der Frequenzverteilung des empfangenen Signals, kann Informationen aufweisen über eine Bewegung des Grundkörpers 101 und/oder eine Bewegung des Simulationselements 103 der Dummy-Vorrichtung.

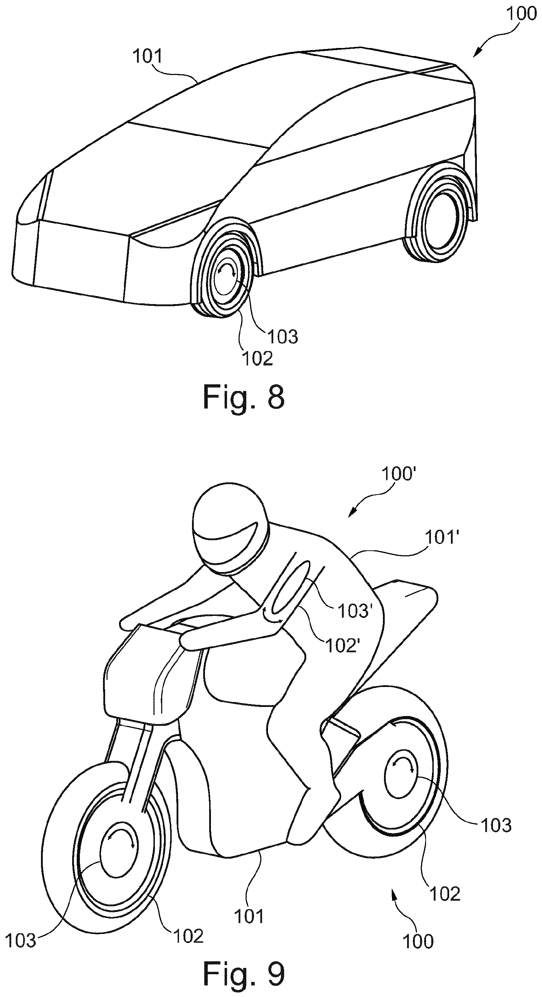

**Figur 8** zeigt eine Dummy-Vorrichtung 100 gemäß einer beispielhaften Ausführungsform. Die Dummy-Vorrichtung 100 ist hier ein Auto-Dummy. Entsprechend ist der Grundkörper 101 ein Auto-Grundkörper. Der Auto-Grundkörper bildet ein Auto ab. Deswegen kann er in seinen geometrischen Ausmaßen näherungsweise einem tatsächlichen Auto entsprechen, kann aber aus anderen Materialien hergestellt sein als ein tatsächliches Auto und einen weit weniger komplexen Aufbau als ein tatsächliches Auto besitzen. Der Auto-Grundkörper weist einen Simulationsbereich 102 auf, der ein bewegliches Element des Autos simuliert. Das zu simulierende bewegliche Element des Autos kann hier ein Rad sein, insbesondere eine Felge. Ein Simulationselement 103 ist an dem Simulationsbereich 102 angeordnet und relativ zu dem Simulationsbereich 102 bewegbar. Das Simulationselement 103 kann ein scheibenförmiges Element aufweisen.

**Figur 9** zeigt eine Dummy-Vorrichtung 100 gemäß einer beispielhaften Ausführungsform. Die Dummy-Vorrichtung 100 ist hier ein Motorrad-Dummy. Entsprechend ist der Grundkörper 101 ein Motorrad-Grundkörper. Der Motorrad-Grundkörper weist einen Simulationsbereich 102 auf, der ein bewegliches Element des Motorrads simuliert. Das zu simulierende bewegliche Element des Motorrads kann hier ein Rad sein, insbesondere eine Felge. Ein Simulationselement 103 ist an dem Simulationsbereich 102 angeordnet und relativ zu dem Simulationsbereich 102 bewegbar. Das Simulationselement 103 kann ein scheibenförmiges Element aufweisen. Vorderrad und Hinterrad des Motorrads können jeweils getrennt simuliert werden.

In Figur 9 ist außerdem ein Fahrer-Dummy als eine weitere Dummy-Vorrichtung 100' dargestellt. Der Grundkörper 101' ist ein Fahrer-Grundkörper. Der Fahrer-Grundkörper weist einen Simulationsbereich 102' auf, der ein bewegliches Element des Fahrers simuliert. Das zu simulierende bewegliche Element ist hier ein Arm, insbesondere ein Oberarm, des Fahrers. Das Simulationselement 103' ist an dem Simulationsbereich 102' angeordnet und relativ zu dem Simulationsbereich 102' bewegbar, zum Beispiel pendelartig bewegbar. Das Simulationselement 103' kann beispielsweise ein stabförmiges Element aufweisen, das mittels eines Gelenks mit dem Simulationsbereich 102' verbunden ist. Die beiden Dummy-Vorrichtungen 100 und 100' können auch als eine einzelne Dummy-Vorrichtung mit mehreren Simulationsbereichen und entsprechenden Simulationselementen aufgefasst werden.

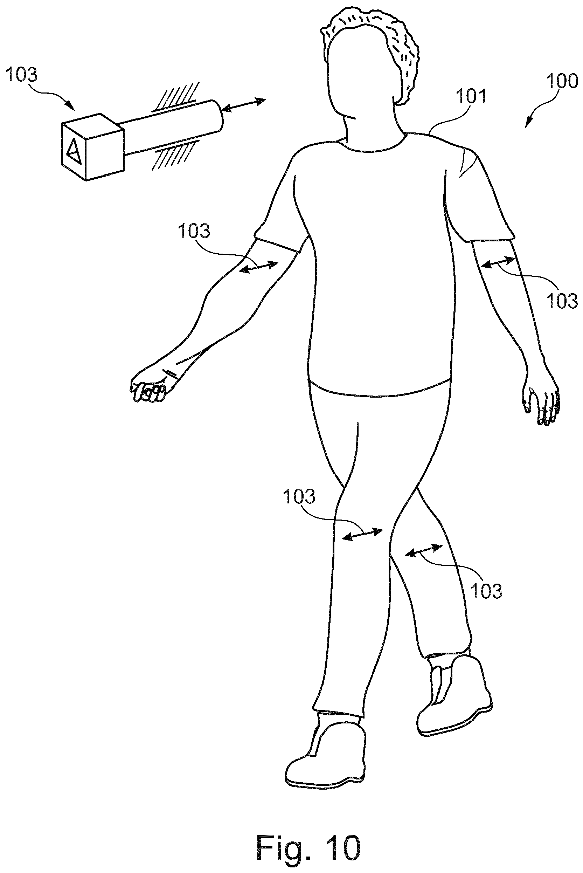

**Figur 10** zeigt eine Dummy-Vorrichtung 100 gemäß einer beispielhaften Ausführungsform. Die Dummy-Vorrichtung 100 ist hier ein menschlicher Dummy. Der Grundkörper 101 des Dummys ist starr, hat also keine beweglichen Teile. Insbesondere sind Arme und Beine des Dummys unbeweglich. An jeder Extremität, also an jedem Bein und jedem Arm, ist ein Simulationselement 103 beweglich angebracht. Die Simulationselemente 103 sind jeweils in der Mitte der Extremitäten befestigt, also im Bereich des Knies oder des Ellbogens. Wie in der Detailansicht oben links in Figur 10 dargestellt, sind die Simulationselemente 103 entsprechend der in Figur 6 gezeigten Ausführungsform ausgebildet. Die Bewegungsrichtung der Simulationselemente 103 kann senkrecht zur Erstreckungsrichtung der Extremitäten und/oder senkrecht zur Haupterstreckungsrichtung des Dummys sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Dummy-Vorrichtung
- 101: Grundkörper
- 102: Simulationsbereich
- 103: Simulationselement
- 104: retroreflektierendes Element
- 105: Drehpunkt
- 106: stabförmiges Element
- 107: Haupterstreckungsrichtung
- 108: reflektierendes und/oder emittierendes Element
- 201: Oberfläche des Simulationselements
- 202: konkaver Bereich
- 203: zweites reflektierendes und/oder emittierendes Element
- 301: Scheibe
- 302: weiteres reflektierendes und/oder emittierendes Element
- 401: weitere Oberfläche des Simulationselements
- 402: konvexer Bereich
- 700: Test-System
- 701: Sender
- 702: Empfänger
- 703: Signalverarbeitungseinheit
- 704: gesendete Signale
- 705: reflektierte Signale
- 710: Testeinheit
- dₛ: Radius der Scheibe
- dᵣ: Radius des Simulationsbereich

## Patentansprüche

1. Eine Dummy-Vorrichtung (100) zum Durchführen von Tests für Fahrerassistenzsysteme, aufweisend:
einen Grundkörper (101) mit einem Simulationsbereich (102),
wobei der Grundkörper ein zu simulierendes Objekt abbildet und der Simulationsbereich (102) einen beweglichen Teil des zu simulierenden Objekts abbildet, wobei der Simulationsbereich (102) statisch an dem Grundkörper (101) angeordnet ist;
mindestens ein Simulationselement (103), das an dem Simulationsbereich (102) angeordnet ist;
wobei das Simulationselement (103) konfiguriert ist, Signale (704, 705) derart zu reflektieren und/oder zu emittieren, dass eine Bewegung des beweglichen Teils des zu simulierenden Objekts simulierbar ist; und
einen Aktuator, mit welchem das Simulationselement (103) antreibbar ist,
wobei sich das Simulationselement (103) in seiner geometrischen Form und Größe von dem Simulationsbereich (102) unterscheidet,
eine Steuereinheit, mittels welcher die Bewegung und die Geschwindigkeit der Bewegung des Simulationselements (103) steuerbar ist, um eine Reflexionscharakteristik des Simulationselements (103) zu erhalten,
wobei die Geschwindigkeit des Simulationselements (103) in Abhängigkeit von der Geschwindigkeit des Grundkörpers (101) relativ zur Umgebung steuerbar ist.

2. Die Dummy-Vorrichtung (100) gemäß Anspruch 1, wobei das Simulationselement (103) relativ zu dem Simulationsbereich (102) beweglich ist.

3. Die Dummy-Vorrichtung (100) gemäß einem der Ansprüche 1 oder 2, wobei das Simulationselement (103) ein retroreflektierendes Element (104), insbesondere einen Tripelspiegel oder ein Tripelprisma, aufweist.

4. Die Dummy-Vorrichtung (100) gemäß einem der Ansprüche 1 bis 3, wobei das Simulationselement eine Oberfläche (201) aufweist, welche einen konkaven Bereich (202) aufweist,
wobei das Simulationselement (103) insbesondere eine weitere Oberfläche (401) aufweist, welche einen konvexen Bereich (402) aufweist,
wobei die Oberfläche (201) und die weitere Oberfläche (401) einander gegenüberliegen.

5. Die Dummy-Vorrichtung (100) gemäß einem der Ansprüche 1 oder 2,
wobei das Simulationselement (103) eine Oberfläche (201) und eine weitere Oberfläche (401), die der Oberfläche (201) gegenüberliegt, aufweist,
wobei die Oberfläche (201) und die weitere Oberfläche (401) im Wesentlichen plan ausgebildet sind.

6. Die Dummy-Vorrichtung (100) gemäß einem der vorherigen Ansprüche, wobei das Simulationselement (103) ein radarreflektierendes Element aufweist und die Signale (704, 705) Radarwellen sind.

7. Die Dummy-Vorrichtung (100) gemäß einem der Ansprüche 1 bis 6,
wobei das Simulationselement (103) an einem Drehpunkt (105) an dem Grundkörper (101) befestigt und drehbar gelagert ist und
wobei das Simulationselement (103) konfiguriert ist, zumindest eines von einer Rotationsbewegung und einer Pendelbewegung um den Drehpunkt (105) auszuführen,
wobei das Simulationselement (103) insbesondere ein stabförmiges Element (106) aufweist, dessen Haupterstreckungsrichtung (107) im Wesentlichen in radialer Richtung von dem Drehpunkt (105) verläuft, und
mindestens ein reflektierendes und/oder emittierendes Element (108), das an dem stabförmigen Element (106) angebracht ist,
wobei insbesondere der Abstand in radialer Richtung zwischen dem Drehpunkt (105) und dem reflektierenden und/oder emittierenden Element (108) kleiner ist als der Durchmesser dᵣ des Simulationsbereichs (102), insbesondere kleiner als 1/2 dᵣ.

8. Die Dummy-Vorrichtung (100) gemäß Anspruch 7, wobei das Simulationselement (103) aufweist:
eine Scheibe (301), die an dem Drehpunkt (105) drehbar gelagert ist, und mindestens ein reflektierendes und/oder emittierendes Element (108), welches an dem Umfang der Scheibe (301) angebracht ist
wobei das reflektierende und/oder emittierende Element (108) ein metallisches Element ist, oder
wobei das Simulationselement (103) mindestens ein weiteres reflektierendes und/oder emittierendes Element (302) aufweist,
wobei das reflektierende und/oder emittierende Element (108) und das weitere reflektierende und/oder emittierende Element (302) jeweils eine Oberfläche (201) und jeweils eine weitere Oberfläche (402), die der Oberfläche (201) gegenüberliegt, aufweisen,
wobei die Oberfläche (201) konfiguriert ist, die Signale (704, 705) stärker zu reflektieren und/oder zu emittieren als die weitere Oberfläche (402),
wobei die Oberfläche (201) des reflektierenden und/oder emittierenden Elements (108) und die Oberfläche (201) des weiteren reflektierenden und/oder emittierenden Elements (302) entlang des Umfangs der Scheibe (301) in entgegengesetzte Richtungen weisen,
wobei das reflektierende und/oder emittierende Element (108) und das weitere reflektierende und/oder emittierende Element (302) alternierend entlang des Umfangs angebracht sind.

9. Die Dummy-Vorrichtung (100) gemäß Anspruch 8,
wobei der Durchmesser dₛ der Scheibe (301) kleiner ist als der Durchmesser dᵣ des Simulationsbereichs (102), insbesondere kleiner als 1/2 dᵣ,
wobei insbesondere die Scheibe (301) derart konfiguriert ist, dass sie mit einer Winkelgeschwindigkeit drehbar ist, so dass das reflektierende und/oder emittierende Element (108) im Wesentlichen mit derselben Geschwindigkeit bewegbar ist wie der bewegliche Teil des zu simulierenden Objekts.

10. Die Dummy-Vorrichtung (100) gemäß einem der Ansprüche 1 bis 6,
wobei das Simulationselement (103) aufweist:
ein stabförmiges Element (106) und
mindestens ein reflektierendes und/oder emittierendes Element (108), das an einem Ende des stabförmigen Elements angebracht ist,
wobei das stabförmige Element (106) insbesondere konfiguriert ist, eine im Wesentlichen lineare Bewegung auszuführen, insbesondere im Wesentlichen entlang der Haupterstreckungsachse (107) des stabförmigen Elements (106), wobei insbesondere eine Oberfläche mit einem retroreflektierenden Element (104) des reflektierenden und/oder emittierenden Elements (108) im Wesentlichen senkrecht zu der Haupterstreckungsachse ausgerichtet ist,
wobei das stabförmige Element (106) insbesondere derart an dem Simulationsbereich (102) angeordnet ist, dass das stabförmige Element (106) mit einer Geschwindigkeit bewegbar ist, die im Wesentlichen entspricht einer Geschwindigkeitskomponente des beweglichen Teils des zu simulierenden Objekts, wobei insbesondere die Geschwindigkeit des stabförmigen Elements (106) über die Zeit sinusförmig änderbar ist.

11. Die Dummy-Vorrichtung (100) gemäß einem der vorherigen Ansprüche, wobei der Grundkörper (101) konfiguriert ist, zumindest eines zu simulieren von einem Auto, einem Motorrad, einem Fahrrad, einem Menschen, insbesondere einem Fußgänger, und einem Tier, insbesondere einem Wildschwein oder einem Reh.

12. Die Dummy-Vorrichtung (100) gemäß einem der vorherigen Ansprüche, wobei der Simulationsbereich (102) konfiguriert ist, zumindest eines zu simulieren von einem Oberschenkel, einem Knie, einem Unterschenkel, einem Fuß, einem Oberarm, einem Ellbogen, einem Unterarm, einer Hand, einer Pfote, einem Rad und einer Felge.

13. Ein Verfahren zum Betreiben einer Dummy-Vorrichtung (100), das Verfahren aufweisend:
Bereitstellen einer Dummy-Vorrichtung (100), wobei die Dummy-Vorrichtung (100) aufweist einen Grundkörper (101) mit einem Simulationsbereich (102) und mindestens ein Simulationselement (103), das an dem Simulationsbereich (102) angeordnet ist und relativ zum Simulationsbereich (102) beweglich ist;
Bewegen des Simulationselements (103) relativ zu dem Simulationsbereich (102) derart, dass eine Bewegung eines beweglichen Teils eines zu simulierenden Objekts simuliert wird, wobei der Simulationsbereich den beweglichen Teil des zu simulierenden Objekts abbildet, wobei der Simulationsbereich (102) statisch an dem Grundkörper (101) angeordnet ist,
wobei das Simulationselement (103) konfiguriert ist, Signale (704, 705) zu reflektieren und/oder zu emittieren,
wobei das Simulationselement (103) mit einem Aktuator angetrieben wird, wobei sich das Simulationselement (103) in seiner geometrischen Form und Größe von dem Simulationsbereich (102) unterscheidet,
wobei mittels einer Steuereinheit die Bewegung und die Geschwindigkeit der Bewegung des Simulationselements (103) steuerbar ist, um eine Reflexionscharakteristik des Simulationselements (103) zu erhalten,
wobei die Geschwindigkeit des Simulationselements (103) in Abhängigkeit von der Geschwindigkeit des Grundkörpers (101) relativ zur Umgebung steuerbar ist.

14. Ein Simulationselement (103) für eine Dummy-Vorrichtung (100) zum Durchführen von Tests für Fahrerassistenzsysteme,
wobei das Simulationselement (103) konfiguriert ist, Signale (704, 705) derart zu reflektieren und/oder zu emittieren, dass eine Bewegung eines beweglichen Teils eines zu simulierenden Objekts simulierbar ist;
wobei das Simulationselement an einem Simulationsbereich (102) eines Grundkörpers (101) der Dummy-Vorrichtung (100) befestigbar ist, wobei der Grundkörper das zu simulierendes Objekt abbildet und der Simulationsbereich (102) den beweglichen Teil des zu simulierenden Objekts abbildet, wobei der Simulationsbereich (102) statisch an dem Grundkörper (101) angeordnet ist;
wobei das Simulationselement (103) mit einem Aktuator angetrieben wird, wobei sich das Simulationselement (103) in seiner geometrischen Form und Größe von dem Simulationsbereich (102) unterscheidet,
wobei mittels einer Steuereinheit die Bewegung und die Geschwindigkeit der Bewegung des Simulationselements (103) steuerbar ist, um eine Reflexionscharakteristik des Simulationselements (103) zu erhalten,
wobei die Geschwindigkeit des Simulationselements (103) in Abhängigkeit von der Geschwindigkeit des Grundkörpers (101) relativ zur Umgebung steuerbar ist.

## Claims

1. A dummy device (100) for performing tests for driver assistance systems, comprising:
a base body (101) with a simulation area (102),
wherein the base body represents an object to be simulated and the simulation area (102) represents a movable part of the object to be simulated, wherein the simulation area (102) is statically arranged on the base body (101);
at least one simulation element (103), which is arranged on the simulation area (102);
wherein the simulation element (103) is configured to reflect and/or emit signals (704, 705) such that a movement of the movable part of the object to be simulated can be simulated; and
an actuator, by which the simulation element (103) can be driven,
wherein the simulation element (103) differs in its geometric shape and size from the simulation area (102),
a control unit, by means of which the movement and the velocity of the movement of the simulation element (103) is controllable in order to obtain a reflection characteristic of the simulation element (103),
wherein the velocity of the simulation element (103) is controllable depending on the velocity of the base body (101) relative to the environment.

2. The dummy device (100) according to claim 1, wherein the simulation element (103) is movable relative to the simulation area (102).

3. The dummy device (100) according to one of the claims 1 or 2, wherein the simulation element (103) comprises a retroreflective element (104), in particular a triple mirror or a triple prism.

4. The dummy device (100) according to one of the claims 1 to 3, wherein the simulation element comprises a surface (201) which comprises a concave area (202),
wherein the simulation element (103) in particular comprises a further surface (401) which comprises a convex area (402),
wherein the surface (201) and the further surface (401) are opposite to each other.

5. The dummy device (100) according to one of the claims 1 or 2,
wherein the simulation element (103) comprises a surface (201) and a further surface (401) which is opposite to the surface (201),
wherein the surface (201) and the further surface (401) are formed substantially planar.

6. The dummy device (100) according to one of the preceding claims, wherein the simulation element (103) comprises a radar reflecting element and the signals (704, 705) are radar waves.

7. The dummy device (100) according to one of the claims 1 to 6,
wherein the simulation element (103) is attached and rotatably supported at the base body (101) at a pivot point (105), and
wherein the simulation element (103) is configured to perform at least one of a rotational movement and a pendulum movement about the pivot point (105), wherein the simulation element (103) in particular comprises a rod-shaped element (106), the main extension direction (107) of which extends substantially in the radial direction from the pivot point (105), and
at least one reflecting and/or emitting element (108), which is attached to the rod-shaped element (106),
wherein in particular the distance in the radial direction between the pivot point (105) and the reflecting and/or emitting element (108) is smaller than the diameter dᵣ of the simulation area (102), in particular smaller than 1/2 dᵣ.

8. The dummy device (100) according to claim 7, wherein the simulation element (103) comprises:
a disc (301), which is rotatably supported at the pivot point (105), and
at least one reflecting and/or emitting element (108), which is attached to the circumference of the disc (301),
wherein the reflecting and/or emitting element (108) is a metallic element, or wherein the simulation element (103) comprises at least one further reflecting and/or emitting element (302),
wherein the reflecting and/or emitting element (108) and the further reflecting and/or emitting element (302) each comprise a surface (201) and each comprise a further surface (402) which is opposite to the surface (201),
wherein the surface (201) is configured to reflect and/or emit the signals (704, 705) more strongly than the further surface (402),
wherein the surface (201) of the reflecting and/or emitting element (108) and the surface (201) of the further reflecting and/or emitting element (302) point in opposite directions along the circumference of the disc (301),
wherein the reflecting and/or emitting element (108) and the further reflecting and/or emitting element (302) are attached alternately along the circumference.

9. The dummy device (100) according to claim 8,
wherein the diameter dₛ of the disc (301) is smaller than the diameter dᵣ of the simulation area (102), in particular smaller than 1/2 dᵣ,
wherein in particular the disc (301) is configured such that it is rotatable at an angular velocity, so that the reflecting and/or emitting element (108) is movable substantially at the same velocity as the movable part of the object to be simulated.

10. The dummy device (100) according to one of the claims 1 to 6,
wherein the simulation element (103) comprises:
a rod-shaped element (106) and
at least one reflecting and/or emitting element (108), which is attached to an end of the rod-shaped element,
wherein the rod-shaped element (106) in particular is configured to perform a substantially linear movement, in particular substantially along the main extension axis (107) of the rod-shaped element (106),
wherein in particular a surface with a retroreflective element (104) of the reflecting and/or emitting element (108) is oriented substantially perpendicular to the main extension axis,
wherein the rod-shaped element (106) in particular is arranged on the simulation area (102) such that the rod-shaped element (106) is movable at a velocity which substantially corresponds to a velocity component of the movable part of the object to be simulated, wherein in particular the velocity of the rod-shaped element (106) can be changed sinusoidally over time.

11. The dummy device (100) according to one of the preceding claims, wherein the base body (101) is configured to simulate at least one of a car, a motorcycle, a bicycle, a human, in particular a pedestrian, and an animal, in particular a wild pig or a deer.

12. The dummy device (100) according to one of the preceding claims, wherein the simulation area (102) is configured to simulate at least one of an upper leg, a knee, a lower leg, a foot, an upper arm, an elbow, a lower arm, a hand, a paw, a wheel and a rim.

13. A method for operating a dummy device (100), the method comprising:
providing a dummy device (100), wherein the dummy device (100) comprises a base body (101) with a simulation area (102) and at least one simulation element (103), which is arranged on the simulation area (102) and is movable relative to the simulation area (102);
moving the simulation element (103) relative to the simulation area (102) such that a movement of a movable part of an object to be simulated is simulated, wherein the simulation area represents the movable part of the object to be simulated, wherein the simulation area (102) is statically arranged at the base body (101),
wherein the simulation element (103) is configured to reflect and/or emit signals (704, 705),
wherein the simulation element (103) is driven by an actuator, wherein the simulation element (103) differs in its geometric shape and size from the simulation area (102),
wherein the movement and the velocity of the movement of the simulation element (103) is controllable by means of a control unit in order to obtain a reflection characteristic of the simulation element (103),
wherein the velocity of the simulation element (103) is controllable depending on the velocity of the base body (101) relative to the environment.

14. A simulation element (103) for a dummy device (100) for performing tests for driver assistance systems,
wherein the simulation element (103) is configured to reflect and/or emit signals (704, 705) such that a movement of a movable part of an object to be simulated can be simulated;
wherein the simulation element is attachable to a simulation area (102) of a base body (101) of the dummy device (100), wherein the base body represents the object to be simulated and the simulation area (102) represents the movable part of the object to be simulated, wherein the simulation area (102) is statically arranged at the base body (101);
wherein the simulation element (103) is driven by an actuator, wherein the simulation element (103) differs in its geometric shape and size from the simulation area (102),
wherein the movement and the velocity of the movement of the simulation element (103) is controllable by means of a control unit in order to obtain a reflection characteristic of the simulation element (103),
wherein the velocity of the simulation element (103) is controllable depending on the velocity of the base body (101) relative to the environment.

## Revendications

1. Dispositif factice (100) permettant d'effectuer des tests pour des systèmes d'aide à la conduite, présentant :
un corps de base (101) comprenant une région de simulation (102),
dans lequel le corps de base représente un objet à simuler et la région de simulation (102) représente une partie mobile de l'objet à simuler, dans lequel la région de simulation (102) est agencée de manière statique au niveau du corps de base (101) ;
au moins un élément de simulation (103) agencé au niveau de la région de simulation (102) ;
dans lequel l'élément de simulation (103) est configuré pour réfléchir et/ou émettre des signaux (704, 705) de manière à pouvoir simuler un mouvement de la partie mobile de l'objet à simuler ; et
un actionneur avec lequel l'élément de simulation (103) peut être entraîné,
dans lequel l'élément de simulation (103) diffère de la région de simulation (102) par sa forme géométrique et sa taille,
une unité de commande au moyen de laquelle le mouvement et la vitesse du mouvement de l'élément de simulation (103) peuvent être commandés afin d'obtenir une caractéristique de réflexion de l'élément de simulation (103),
dans lequel la vitesse de l'élément de simulation (103) peut être commandée en fonction de la vitesse du corps de base (101) par rapport à l'environnement.

2. Dispositif factice (100) selon la revendication 1, dans lequel l'élément de simulation (103) est mobile par rapport à la région de simulation (102).

3. Dispositif factice (100) selon l'une quelconque des revendications 1 ou 2, dans lequel l'élément de simulation (103) présente un élément rétroréfléchissant (104), en particulier un miroir triple ou un prisme triple.

4. Dispositif factice (100) selon l'une quelconque des revendications 1 à 3, dans lequel l'élément de simulation présente une surface (201) présentant une région concave (202),
dans lequel l'élément de simulation (103) présente en particulier une surface supplémentaire (401) qui présente une région convexe (402),
dans lequel la surface (201) et la surface supplémentaire (401) se font face.

5. Dispositif factice (100) selon l'une quelconque des revendications 1 ou 2, dans lequel l'élément de simulation (103) présente une surface (201) et une surface supplémentaire (401) faisant face à la surface (201), dans lequel la surface (201) et la surface supplémentaire (401) sont essentiellement planes.

6. Dispositif factice (100) selon l'une quelconque des revendications précédentes, dans lequel l'élément de simulation (103) présente un élément de réflexion radar et les signaux (704, 705) sont des ondes radar.

7. Dispositif factice (100) selon l'une quelconque des revendications 1 à 6, dans lequel l'élément de simulation (103) est fixé et supporté en rotation sur le corps de base (101) au niveau d'un point pivot (105), et dans lequel l'élément de simulation (103) est configuré pour effectuer au moins un mouvement parmi un mouvement de rotation et un mouvement pendulaire autour du point pivot (105),
dans lequel l'élément de simulation (103) présente en particulier un élément en forme de tige (106) dont la direction d'extension principale (107) s'étend essentiellement dans la direction radiale à partir du point pivot (105), et
au moins un élément réfléchissant et/ou émissif (108) placé au niveau de l'élément en forme de tige (106),
dans lequel la distance dans la direction radiale entre le point pivot (105) et l'élément réfléchissant et/ou émissif (108) est inférieure au diamètre dᵣ de la région de simulation (102), en particulier inférieure à 1/2 dᵣ.

8. Appareil factice (100) selon la revendication 7, dans lequel l'élément de simulation (103) présente :
un disque (301) qui est monté rotatif au niveau du point pivot (105), et au moins un élément réfléchissant et/ou émissif (108) placé au niveau de la périphérie du disque (301)
dans lequel l'élément réfléchissant et/ou émissif (108) est un élément métallique, ou
dans lequel l'élément de simulation (103) présente au moins un élément réfléchissant et/ou émissif supplémentaire (302),
dans lequel l'élément réfléchissant et/ou émissif (108) et l'élément réfléchissant et/ou émissif supplémentaire (302) présentent respectivement une surface (201) et respectivement une surface supplémentaire (402) faisant face à la surface (201),
dans lequel la surface (201) est configurée pour réfléchir et/ou émettre les signaux (704, 705) plus fortement que la surface supplémentaire (402),
dans lequel la surface (201) de l'élément réfléchissant et/ou émissif (108) et la surface (201) de l'élément réfléchissant et/ou émissif supplémentaire (302) regardent dans des directions opposées le long de la périphérie du disque (301),
dans lequel l'élément réfléchissant et/ou émissif (108) et l'élément réfléchissant et/ou émissif supplémentaire (302) sont placés de manière alternée le long de la périphérie.

9. Dispositif factice (100) selon la revendication 8, dans lequel le diamètre dₛ du disque (301) est inférieur au diamètre dᵣ de la région de simulation (102), en particulier inférieur à 1/2 dᵣ, dans lequel le disque (301) est en particulier configuré pour pouvoir tourner à une vitesse angulaire telle que l'élément réfléchissant et/ou émissif (108) est mobile essentiellement à la même vitesse que la partie mobile de l'objet à simuler.

10. Dispositif factice (100) selon l'une quelconque des revendications 1 à 6,
dans lequel l'élément de simulation (103) présente :
un élément en forme de tige (106) et
au moins un élément réfléchissant et/ou émissif (108) placé à une extrémité de l'élément en forme de tige,
dans lequel l'élément en forme de tige (106) est en particulier configuré pour effectuer un mouvement essentiellement linéaire, en particulier essentiellement le long de l'axe d'extension principal (107) de l'élément en forme de tige (106),
dans lequel une surface comprenant un élément rétroréfléchissant (104) de l'élément réfléchissant et/ou émissif (108) est en particulier orientée de manière essentiellement perpendiculaire à l'axe d'extension principal,
dans lequel l'élément en forme de tige (106) est en particulier agencé au niveau de la région de simulation (102) de telle manière que l'élément en forme de tige (106) est mobile à une vitesse qui correspond essentiellement à une composante de vitesse de la partie mobile de l'objet à simuler, dans lequel la vitesse de l'élément en forme de tige (106) peut en particulier être modifiée de manière sinusoïdale dans le temps.

11. Dispositif factice (100) selon l'une quelconque des revendications précédentes, dans lequel le corps de base (101) est configuré pour simuler au moins un élément parmi une voiture, une moto, une bicyclette, un être humain, en particulier un piéton, et un animal, en particulier un sanglier ou un chevreuil.

12. Dispositif factice (100) selon l'une quelconque des revendications précédentes, dans lequel la région de simulation (102) est configurée pour simuler au moins un élément parmi une cuisse, un genou, une jambe, un pied, un bras, un coude, un avant-bras, une main, une patte, une roue et une jante.

13. Procédé d'exploitation d'un dispositif factice (100), le procédé comprenant les étapes consistant à :
fournir un dispositif factice (100), dans lequel le dispositif factice (100) présente un corps de base (101) comprenant une région de simulation (102) et au moins un élément de simulation (103) agencé au niveau de la région de simulation (102) et mobile par rapport à la région de simulation (102) ;
déplacer l'élément de simulation (103) par rapport à la région de simulation (102) de manière à simuler un mouvement d'une partie mobile d'un objet à simuler, dans lequel la région de simulation représente la partie mobile de l'objet à simuler, dans lequel la région de simulation (102) est agencée de manière statique au niveau du corps de base (101), dans lequel l'élément de simulation (103) est configuré pour réfléchir et/ou émettre des signaux (704, 705),
dans lequel l'élément de simulation (103) est entraîné par un actionneur,
dans lequel l'élément de simulation (103) diffère de la région de simulation (102) par sa forme géométrique et sa taille, dans lequel le mouvement et la vitesse du mouvement de l'élément de simulation (103) peuvent être commandés au moyen d'une unité de commande afin d'obtenir une caractéristique de réflexion de l'élément de simulation (103), dans lequel la vitesse de l'élément de simulation (103) peut être commandée en fonction de la vitesse du corps de base (101) par rapport à l'environnement.

14. Élément de simulation (103) destiné à un dispositif factice (100) permettant d'effectuer des tests pour des systèmes d'aide à la conduite,
dans lequel l'élément de simulation (103) est configuré pour réfléchir et/ou émettre des signaux (704, 705) de manière à pouvoir simuler un mouvement d'une partie mobile de l'objet à simuler ;
dans lequel l'élément de simulation peut être fixé à une région de simulation (102) d'un corps de base (101) du dispositif factice (100), dans lequel le corps de base représente l'objet à simuler et la région de simulation (102) représente la partie mobile de l'objet à simuler, dans lequel la région de simulation (102) est agencée de manière statique au niveau du corps de base (101) ;
dans lequel l'élément de simulation (103) est entraîné par un actionneur, dans lequel l'élément de simulation (103) diffère de la région de simulation (102) par sa forme géométrique et sa taille,
dans lequel le mouvement et la vitesse du mouvement de l'élément de simulation (103) peuvent être commandés au moyen d'une unité de commande afin d'obtenir une caractéristique de réflexion de l'élément de simulation (103), dans lequel la vitesse de l'élément de simulation (103) peut être commandée en fonction de la vitesse du corps de base (101) par rapport à l'environnement.
